# EUROPEAN PATENT APPLICATION

(11) **EP 4 848 058 A1**
(43) Date of publication of application: **02.12.2026**
(21) Application number: 24927844.1
(22) Date of filing: 08.03.2024
(51) Int. Cl.: G06F 3/0488

(54) **TOUCH METHOD AND RELATED DEVICE**

(71) Applicant: Honor Device Co., Ltd., Shenzhen, Guangdong 518040 (CN)
(72) Inventor: WANG, Long, Shenzhen, Guangdong 518040 (CN); JI, Yaxin, Shenzhen, Guangdong 518040 (CN); LI, Xin, Shenzhen, Guangdong 518040 (CN)
(74) Representative: Gill Jennings & Every LLP
(86) International application number: PCT/CN2024/080792
(87) International publication number: WO 2025/184905

(57) **Abstract**

Embodiments of this application provide a touch method and a related device, and relate to the field of terminal technologies. The method includes: displaying a first interface, where the first interface includes a first window and a second window, and one or more icons are displayed in the first window; displaying a second interface in response to a hover operation by a stylus at a first icon, where the second interface includes the first window, the second window, and a third window, the third window floats at an upper layer of the first window, and one or more elements are displayed in the third window; continuing to display the third window on the second interface during the hover operation, and displaying the first element in the second window in response to the operation of dragging the first element from the third window to the second window, where the first element is any one of the one or more elements in the third window. In this way, a user may be supported in quickly browsing pictures and/or files in a plurality of albums and/or folders, thereby shortening a picture and/or file delivery path and simplifying user operations.

## Description

### TECHNICAL FIELD

This application relates to the field of terminal technologies, and in particular, to a touch method and a related device.

### BACKGROUND

An electronic device may provide various functions. For example, a user may share information such as a picture and a file by using the electronic device. For example, the electronic device may interact with a gallery application by using a social application, and deliver a photo in the gallery application to the social application. For another example, the electronic device may interact with a file application by using a social application, and deliver a file in the file application to the social application.

In a possible implementation, when sharing pictures and files, a user needs to find a target picture and a target file from a large quantity of pictures and files, causing complex operations and poor user experience.

### SUMMARY

Embodiments of this application provide a touch method and a related device, which are applied to the field of terminal technologies, to provide a manner of quickly previewing pictures and/or files in a plurality of albums and/or folders and quickly searching for a target picture and/or file by using a hover operation without entering an album and/or a folder.

According to a first aspect, an embodiment of this application provides a touch method, applied to an electronic device. The method includes: displaying a first interface, where the first interface includes a first window and a second window, and one or more icons are displayed in the first window; displaying a second interface in response to a hover operation by a stylus at a first icon of the one or more icons, where the second interface includes the first window, the second window, and a third window, the third window floats at an upper layer of the first window, and one or more elements are displayed in the third window; replacing, when responding to a first operation on the first icon, the first window on the first interface with a fourth window, where elements displayed in the fourth window include the one or more elements in the third window; and continuing to display the third window on the second interface during the hover operation, and displaying, when an operation of dragging a first element from the third window to the second window is received, the first element in the second window in response to the operation of dragging the first element from the third window to the second window, where the first element is any one of the one or more elements in the third window. In this way, a first-level floating window may support a user in quickly browsing pictures and/or files in a plurality of albums and/or folders, to obtain and share a target picture and/or a target file. The user does not need to share a target picture and/or a target file after opening a specific album and/or folder, thereby shortening a picture and/or file delivery path, simplifying user operations, and improving user experience.

In a possible implementation, a first button is further displayed in the third window, and after the continuing to display the third window on the second interface, the method further includes: receiving a trigger operation on the first button; and switching the third window to a fifth window in response to the trigger operation on the first button, where a quantity of elements presented in the fifth window is greater than or equal to a quantity of elements presented in the third window; and the third window on the second interface disappears when the hover operation ends, and the electronic device continues to display the fifth window when the hover operation ends. In this way, the electronic device may switch the first-level floating window to a second-level floating window by using a switch button. After the first-level floating window is switched to the second-level floating window, the user may not perform a hover operation by using the stylus, thereby further simplifying user operations. In addition, the electronic device may display more pictures and/or files by using the second-level floating window, to make it convenient for the user to view all pictures and/or files in an album and/or a folder, thereby improving user experience.

In a possible implementation, the method further includes: receiving an operation of dragging a second element from the fifth window to the second window, where the second element is any one of one or more elements in the fifth window; and displaying the second element in the second window in response to the operation of dragging the second element from the fifth window to the second window. In this way, the second-level floating window may support a user in quickly browsing pictures and/or files in a plurality of albums and/or folders, to obtain and share a target picture and/or a target file. The user does not need to share a target picture and/or a target file after opening a specific album and/or folder, thereby shortening a picture and/or file delivery path, simplifying user operations, and improving user experience.

In a possible implementation, after the switching the third window to a fifth window, the method further includes: displaying a third interface in response to a hover operation by the stylus at a second icon of the one or more icons, where the third interface includes the first window, the fifth window, and a sixth window, and one or more elements are displayed in the sixth window; and the second icon is different from the first icon; replacing, when responding to a second operation on the second icon, the first window on the third interface with a seventh window, where elements displayed in the seventh window include the one or more elements in the sixth window; and continuing to display the sixth window on the third interface during the hover operation, and displaying, when an operation of dragging a third element from the sixth window to the fifth window is received, the third element in the fifth window in response to the operation of dragging the third element from the sixth window to the fifth window; and the third element is any one of one or more elements in the fifth window. In this way, the electronic device may implement a picture and/or file transmission process between a plurality of albums and/or folders of a same application by using the first-level floating window and/or the second-level floating window. The user may conveniently sort albums and/or folders based on the foregoing process without repeatedly entering and/or exiting between a plurality of albums and/or folders, thereby simplifying user operations and improving user experience.

In a possible implementation, the hover operation by the stylus at the first icon of the one or more icons includes: the stylus is located at the first icon, and a distance between the stylus and a touchscreen of the electronic device is less than a distance threshold; and in a process of displaying the third window, if the distance between the stylus and the touchscreen is less than the distance threshold and the stylus does not contact the touchscreen, the third window continues to be displayed when the stylus moves in an area in which the third window is located. In this way, the electronic device can trigger the first-level floating window based on the hover operation, to temporarily preview an element in an icon.

In a possible implementation, after the displaying a second interface, the method further includes: receiving a slide operation in the third window; and displaying, in response to the slide operation, one or more elements moving with a slide position of a touch object in the third window. In this way, the electronic device may display more elements by using a slide-up operation or a slide-down operation in the first-level floating window, to make it convenient for the user to view all pictures corresponding to an icon, thereby improving user experience.

In a possible implementation, the touch object includes a finger of a user or the stylus; and the slide operation includes: a slide operation by the finger of the user in the third window during the hover operation; or a slide operation by the stylus in the third window during the hover operation. In this way, the electronic device may display more elements by using a slide-up operation or a slide-down operation in the first-level floating window, to make it convenient for the user to view all pictures corresponding to an icon, thereby improving user experience.

In a possible implementation, the touch object includes the finger of the user, and the receiving a slide operation in the third window includes: in a process of displaying the third window, receiving a slide operation by the finger of the user in the third window if the distance between the stylus and the touchscreen is less than the distance threshold and the stylus does not contact the touchscreen. In this way, the electronic device may display more elements by using a slide-up operation or a slide-down operation in the first-level floating window, to make it convenient for the user to view all pictures corresponding to an icon, thereby improving user experience.

In a possible implementation, the method further includes: continuing to display the third window when the hover operation ends in a process in which the finger of the user slides in the third window; and after the finger of the user leaves the touchscreen, causing the third window to disappear if a trigger operation by the finger of the user is not received again within first duration. In this way, in a case of a misoperation, the user can still browse the first-level floating window for a period of time and view all pictures in the first-level floating window. The user does not need to perform a hover operation again to view pictures in an album again, thereby simplifying user operations and improving user experience.

In a possible implementation, the touch object includes the finger of the user, and the receiving a slide operation in the third window further includes: continuing to display the third window within first duration when the hover operation ends in the process of displaying the third window; and receiving a slide operation by the finger of the user in the third window within the first duration; and after the displaying one or more elements moving with a slide position of a touch object in the third window, the method further includes: when the finger of the user leaves the touchscreen, causing the third window to disappear if a trigger operation by the touch object is not received again within the first duration. In this way, in a case of a misoperation, the user can still browse the first-level floating window for a period of time and view all pictures in the first-level floating window. The user does not need to perform a hover operation again to view pictures in an album again, thereby simplifying user operations and improving user experience.

In a possible implementation, that the hover operation ends includes: a distance between the stylus and the touchscreen is greater than or equal to the distance threshold, the stylus is not in the area in which the third window is located, and/or a trigger operation is received in a non-function area in the first window or the second window. In this way, after the user finishes browsing the element in the first-level floating window of the first icon, displaying the first-level floating window may be quickly canceled by ending the hover operation, and the element in the first-level floating window of the second icon may be quickly browsed. Therefore, by displaying and canceling displaying the first-level floating window, pictures and/or files in a plurality of albums and/or folders are quickly browsed, thereby improving user experience.

In a possible implementation, a second button is further displayed in the fifth window; and after the switching the third window to a fifth window, the method further includes: displaying, if an operation of dragging the second button by the touch object is received, the fourth window moving with the slide position of the touch object. In this way, the user may adjust the position of the second-level floating window, to reduce obstruction of an icon or other information on a current interface by the second-level floating window, thereby improving user experience.

In a possible implementation, a third button is further displayed in the fifth window; and after the switching the third window to a fifth window, the method further includes: continuing to display the first window and skipping displaying the fifth window when a trigger operation on the third button is received. In this way, the electronic device may cancel displaying the second-level floating window by using the third button, so that the electronic device presents a window or another interface at a lower layer of the second-level floating window.

In a possible implementation, a fourth button is further displayed in the fifth window; and after the switching the third window to a fifth window, the method further includes: replacing the first window with the fifth window when a trigger operation on the fourth button is received. In this way, the electronic device may switch the second-level floating window to a full-screen window by using the fourth button, to magnify and display an element and present more details of the element.

In a possible implementation, the first window includes a window of a gallery application, and the second window includes a window of an application supporting element reception/transmission; the one or more icons include icons of one or more albums, the first icon includes an icon of a first album, and the one or more elements in the third window include one or more images in the first album; and the first element includes any one of the one or more images in the first album. In this way, the first-level floating window and/or the second-level floating window may support the user in quickly browsing pictures in a plurality of albums to obtain and share a target picture. The user does not need to share a target picture after opening a specific album, thereby shortening a picture delivery path, simplifying user operations, and improving user experience.

In a possible implementation, the first window includes a window of a file management application, and the second window includes a window of an application supporting element reception/transmission; the one or more icons include icons of one or more folders, the first icon includes an icon of a first folder, and the one or more elements in the third window include one or more files in the first folder; and the first element includes any file of the one or more files in the first folder. In this way, the first-level floating window and/or the second-level floating window can support the user in browsing filenames in a plurality of folders quickly, to obtain and share a target file. The user does not need to share a target file after opening a specific folder, thereby shortening a file delivery path, simplifying user operations, and improving user experience.

In a possible implementation, the method further includes: displaying a fourth interface, where the fourth interface includes an eighth window, and a third icon is displayed in the eighth window; receiving a tap operation on the third icon; displaying a fifth interface in response to the tap operation on the third icon, where the fifth interface includes the eighth window, and a first image is displayed in the eighth window; receiving a slide operation on the first image, and displaying a second image in the eighth window of the fifth interface, where the second image is different from the first image; displaying a fourth interface, where displaying a sixth interface in response to a hover operation by the stylus at the third icon, where the sixth interface includes the eighth window and a ninth window, and the ninth window floats at an upper layer of the eighth window; and the first image and the second image are displayed in the ninth window, and the second image is not included in the eighth window. In this way, the first-level floating window can support the user in quickly browsing pictures in a plurality of picture and text links, and can omit an operation of taping and opening a web page interface of a picture and text link by the user and sliding to view the pictures, thereby simplifying user operations and quickly viewing the pictures.

In a possible implementation, the method further includes: displaying a seventh interface, where the seventh interface includes a tenth window, and one or more videos are displayed in the tenth window; displaying an eighth interface in response to a hover operation by the stylus at a first video of the one or more videos, where the eighth interface includes the tenth window and an eleventh window, the eleventh window floats at an upper layer of the tenth window, one or more video segments of the first video are displayed in the eleventh window, and any video segment corresponds to a time identifier; receiving a trigger operation on a first video segment, where the first video segment is any video segment in the first video; and displaying a ninth interface in response to a trigger operation on the first video segment, where the first video is played on the ninth interface, and a play progress of the first video corresponds to the time identifier of the first video segment. In this way, the first-level floating window may be used for segmenting and previewing a video, which can save an operation of sliding a progress bar to view each segment of the video by the user after taping and opening the video, thereby simplifying user operations, and quickly viewing the video.

In a possible implementation, a fourth element is further displayed in the third window, and after the displaying a second interface, the method further includes: receiving a long-press operation on the fourth element; displaying a tenth interface in response to the long-press operation on the fourth element, where the tenth interface includes a first pop-up window, and the first pop-up window includes at least one of the following buttons: a button used for saving the fourth element, a button used for sharing the fourth element, a button used for setting the fourth element as a wallpaper, and/or a cancel button; receiving an operation of dragging the fourth element to a target area; displaying a toolbar in the target area in response to the operation of dragging the fourth element to the target area, where the toolbar includes a fourth icon; and the fourth icon is used for storing an element; receiving an operation of continuing to drag the fourth element to the fourth icon; and displaying, in response to the operation of continuing to drag the fourth element to the fourth icon, information used for indicating that storage of the fourth element is completed. In this way, the electronic device may deliver the target picture and/or file to the toolbar, and subsequently deliver the target picture and/or file to a target application by using the toolbar, thereby enriching application scenarios of element delivery, providing a plurality of data transmission manners for the user, and improving user experience.

In a possible implementation, the first window includes a full-screen window, the second window includes a floating window, a dimension of the first window is greater than a dimension of the second window, and the dimension of the first window is less than or equal to a dimension of the touchscreen; the dimension of the second window is the same as a dimension of the fifth window; and a dimension of the third window is different from the dimension of the fifth window. In this way, the electronic device may deliver, based on the first-level floating window and/or the second-level floating window, an element under an icon in the full-screen window to a floating window of the application supporting element reception/transmission, thereby copying and moving the element.

In a possible implementation, the first window includes a split-screen window, the second window includes a split-screen window, and the dimension of the third window is different from the dimension of the fifth window. In this way, the electronic device may deliver, based on the first-level floating window and/or the second-level floating window, an element under an icon in the split-screen window to a split-screen window of the application supporting element reception/transmission, thereby copying and moving the element.

According to a second aspect, an embodiment of this application provides an electronic device. The electronic device may also be referred to as a terminal device, a terminal (terminal), a user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The electronic device includes: includes: a processor and a memory, where the memory stores computer-executable instructions; and the processor executes the computer-executable instructions stored in the memory, so that the electronic device performs the method according to the first aspect.

According to a third aspect, an embodiment of this application provides a computer-readable storage medium. The computer-readable storage medium stores a computer program. The computer program is executed by a processor to implement the method according to the first aspect.

According to a fourth aspect, an embodiment of this application provides a computer program product. The computer program product includes a computer program, and when the computer program is run, a computer is enabled to perform the method according to the first aspect.

An embodiment of this application provides a chip system. The chip system includes at least one processor and a communication interface. The communication interface and the at least one processor are interconnected through a line. The at least one processor is configured to run a computer program or instructions, to perform the method according to the first aspect.

It should be understood that technical solutions of the second aspect to the fifth aspect of this application correspond to the technical solution of the first aspect of this application, and beneficial effects achieved in the aspects and corresponding feasible implementations are similar. Details are not described.

### BRIEF DESCRIPTION OF DRAWINGS

FIG. 1 is a schematic diagram of a hover operation according to an embodiment of this application;
FIG. 2A, FIG. 2B, FIG. 2C, and FIG. 2D are schematic diagrams of an interface of two types of hover operations according to a possible implementation;
FIG. 3A, FIG. 3B, FIG. 3C, and FIG. 3D are schematic diagrams of an interface of another two types of hover operations according to a possible implementation;
FIG. 4 is a schematic diagram of an interface displaying windows of a plurality of application s according to a possible implementation;
FIG. 5 is a schematic diagram of an interface of information exchange between a plurality of applications according to a possible implementation;
FIG. 6 is a schematic diagram of an interface of searching an album for a picture according to a possible implementation;
FIG. 7 is a schematic diagram of an interface of displaying and canceling displaying a first-level floating window according to an embodiment of this application;
FIG. 8 is a schematic diagram of another interface of canceling displaying a first-level floating window according to an embodiment of this application;
FIG. 9 is a schematic diagram of an interface of sliding and presenting more pictures in a first-level floating window according to an embodiment of this application;
FIG. 10 is a schematic diagram of an interface of displaying a second-level floating window according to an embodiment of this application;
FIG. 11 is a schematic diagram of an interface of moving and canceling displaying a second-level floating window according to an embodiment of this application;
FIG. 12 is a schematic diagram of an interface of implementing picture transmission between a plurality of applications by using a first-level floating window according to an embodiment of this application;
FIG. 13 is a schematic diagram of an interface of implementing picture transmission between a plurality of applications by using a second-level floating window according to an embodiment of this application;
FIG. 14 is a schematic diagram of an interface of simultaneously displaying a first-level floating window and a second-level floating window according to an embodiment of this application;
FIG. 15 is a schematic diagram of an interface of implementing picture transmission between a plurality of albums of a gallery application by using a first-level floating window and/or a second-level floating window according to an embodiment of this application;
FIG. 16 is a schematic diagram of another interface of a first-level floating window and a second-level floating window according to an embodiment of this application;
FIG. 17 is a schematic diagram of an interface of implementing file transmission between a plurality of applications by using a first-level floating window according to an embodiment of this application;
FIG. 18 is a schematic diagram of an interface of implementing file transmission between a plurality of applications by using a second-level floating window according to an embodiment of this application;
FIG. 19 is a schematic diagram of an interface of picture transmission between different applications in a split-screen scenario according to an embodiment of this application;
FIG. 20 is a schematic diagram of an interface of a first-level floating window in a picture and text application according to an embodiment of this application;
FIG. 21 is a schematic diagram of an interface of a first-level floating window in a video application according to an embodiment of this application;
FIG. 22 is a schematic diagram of an interface of invoking a toolbar based on a first-level floating window according to an embodiment of this application;
FIG. 23 is a schematic diagram of an interface of implementing picture transmission between a plurality of applications based on a toolbar according to an embodiment of this application;
FIG. 24 is a schematic flowchart of a touch method according to an embodiment of this application;
FIG. 25 is a schematic diagram of a structure of an electronic device 100 according to an embodiment of this application; and
FIG. 26 is a schematic diagram of a structure of a touch apparatus according to an embodiment of this application.

### DESCRIPTION OF EMBODIMENTS

To clearly describe the technical solutions in the embodiments of this application, the following briefly describes some terms and technologies related to the embodiments of this application.

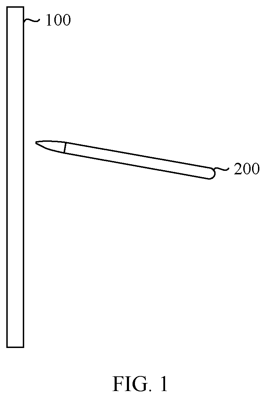

1) Hover operation: Hover refers to that a touch object does not contact a touchscreen, a distance between the touch object and the touchscreen is less than a first distance threshold, and the hover operation refers to an operation of interacting with the touchscreen when the touch object is in a hover state. The touch object may include a finger and a stylus. For example, FIG. 1 is a schematic diagram of a hover operation. Using an example in which a touch object is a stylus 200, if an electronic device 100 supports and enables a hover operation function, when the stylus 200 approaches the electronic device 100 and does not contact the electronic device 100, the electronic device 100 may recognize the hover operation and respond to the hover operation.

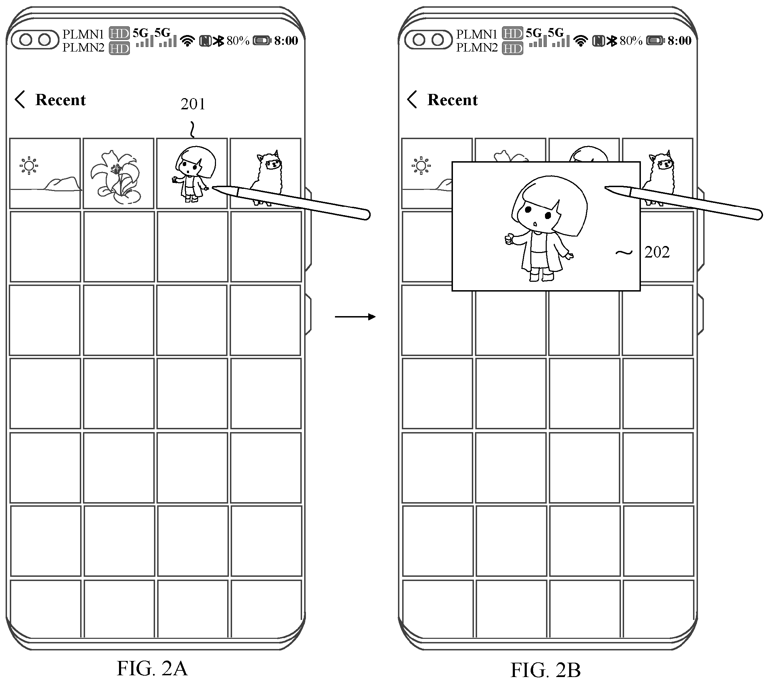

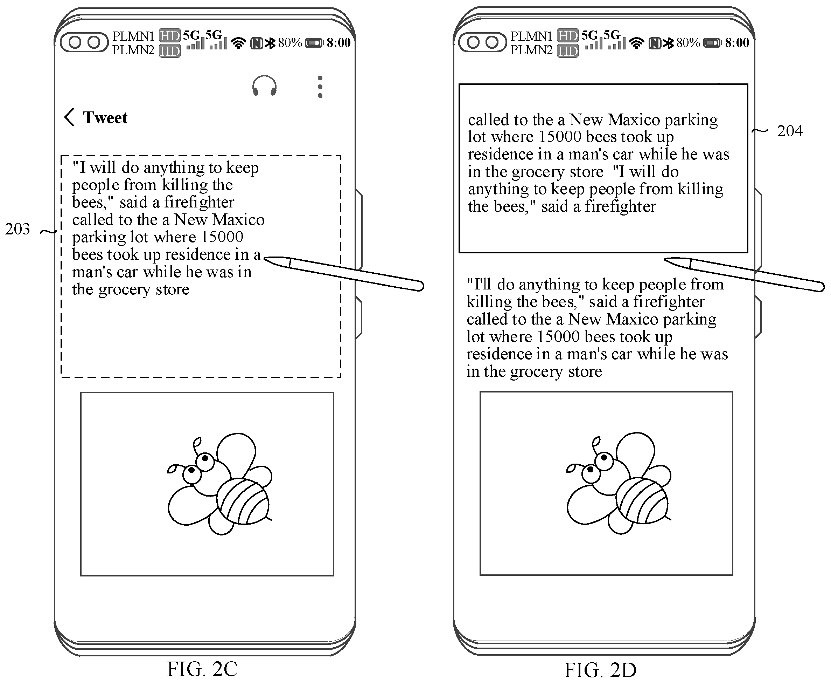

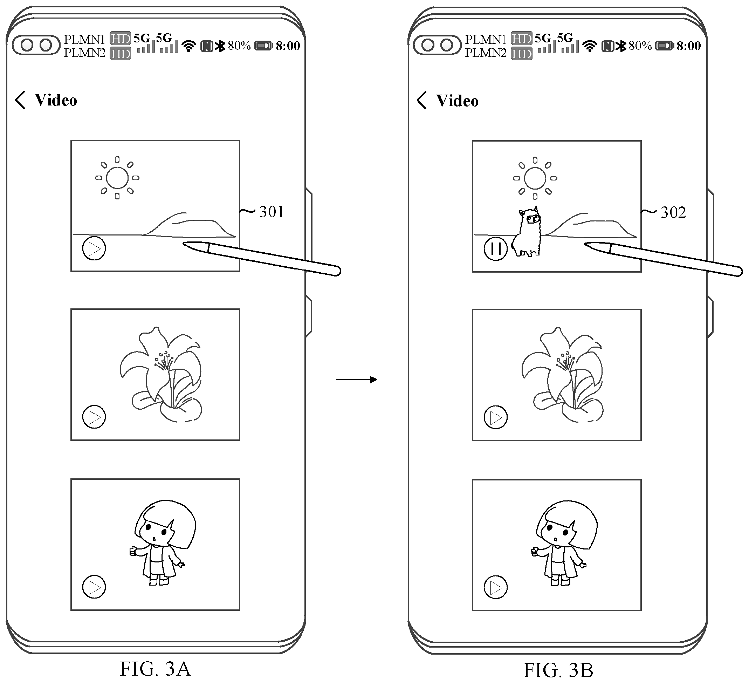

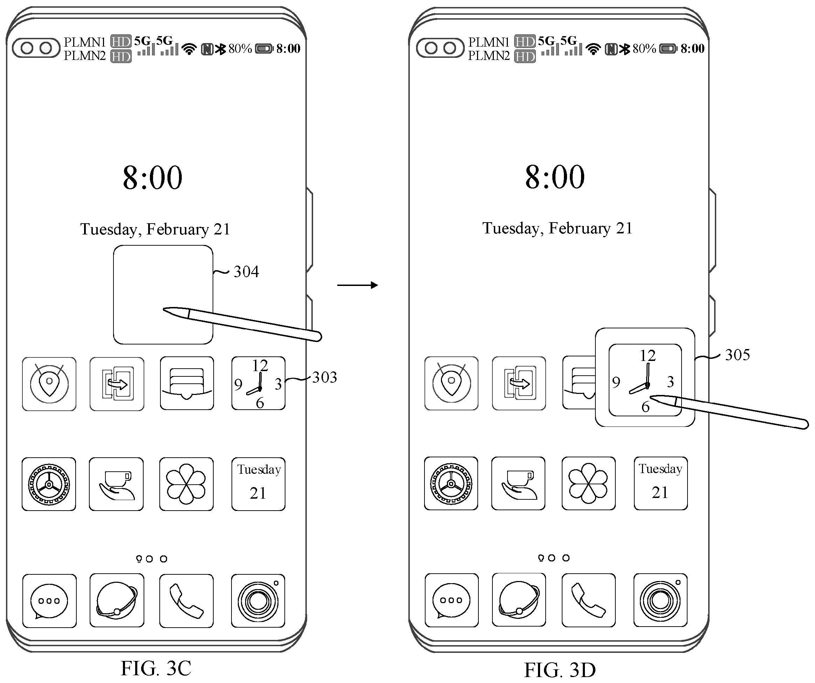

A function that may be implemented by the electronic device 100 based on the hover operation in a possible implementation is described below with reference to FIG. 2A, FIG. 2B, FIG. 2C, and FIG. 2D and FIG. 3A, FIG. 3B, FIG. 3C, and FIG. 3D.

FIG. 2A, FIG. 2B, FIG. 2C, and FIG. 2D are schematic diagrams of an interface of two types of hover operations according to a possible implementation. As shown in FIG. 2A, FIG. 2B, FIG. 2C, and FIG. 2D:

The electronic device may magnify an image based on a hover operation. For example, the electronic device may display a gallery application interface. The gallery application interface is, for example, an interface shown in FIG. 2A. The interface shown in FIG. 2A displays a photo 201. When the electronic device receives a hover operation on the photo 201, the electronic device may display an interface shown in FIG. 2B. In the interface shown in FIG. 2B, the electronic device displays a photo 202. The photo 202 may be a photo 201 that is magnified and displayed.

The electronic device may translate text based on the hover operation. For example, the electronic device may display a browser application interface. The browser application interface is, for example, an interface shown in FIG. 2C. The interface shown in FIG. 2C displays text information 203. The text information 203 may be English text. When the electronic device receives a hover operation on the text information 203, the electronic device may display an interface shown in FIG. 2D. In the interface shown in FIG. 2D, the electronic device displays text information 204. The text information 204 may include some or all of English text in the text information 203 and corresponding Chinese interpretation.

FIG. 3A, FIG. 3B, FIG. 3C, and FIG. 3D are schematic diagrams of an interface of another two types of hover operations according to a possible implementation. As shown in FIG. 3A, FIG. 3B, FIG. 3C, and FIG. 3D:

The electronic device may preview a video, a dynamic picture, or the like based on a hover operation. For example, the electronic device may display a video application interface. The video application interface is, for example, an interface shown in FIG. 3A. The interface shown in FIG. 3A displays a video 301. The video 301 is in a pause state. When the electronic device receives a hover operation on the video 301, the electronic device may display an interface shown in FIG. 3B. In the interface shown in FIG. 3B, the electronic device displays a video 302. The video 302 may be the video 301 in a playing state.

The electronic device may magnify an element based on a hover operation. For example, using an example in which the element is an icon on a desktop, the electronic device may display the desktop, and the desktop may include an icon 303 of a clock application. When the electronic device receives the hover operation on the desktop, the electronic device may display an interface shown in FIG. 3C. A magnifying box 304 is displayed on the interface shown in FIG. 3C, and the magnifying box 304 may be used for magnifying and displaying an element on the interface. For example, in the interface shown in FIG. 3C, when the electronic device receives a movement operation (the stylus does not contact the touchscreen), the magnifying box 304 may move with movement of the stylus. For example, the stylus moves to a position of the icon 303 of the clock application, and the electronic device may display an interface shown in FIG. 3D. In the interface shown in FIG. 3D, the electronic device magnifies and displays the icon 303 of the clock application in a magnifying box 305.

### 2) Electronic device

The terminal device in embodiments of this application may also be an electronic device in any form. For example, the electronic device may include a handheld device, an in-vehicle device, or the like having an image processing function. For example, some electronic devices are: a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, or a terminal device in a future evolved public land mobile network (public land mobile network, PLMN). This is not limited in embodiments of this application.

By way of example but not limitation, in the embodiments of this application, the electronic device may be a wearable device. The wearable device may also be referred to as a wearable intelligent device. The wearable device may be, for example, a smartwatch, smart glasses, a smart bracelet, or smart jewelry. In the embodiments of this application, the electronic device may alternatively be a terminal device in an Internet of Things (internet of things, IoT) system.

The electronic device in embodiments of this application may also be referred to as a terminal device, user equipment (user equipment, UE), a mobile station (mobile station, MS), a mobile terminal (mobile terminal, MT), an access terminal, a user unit, a user station, a mobile site, a mobile station, a remote station, a remote terminal, a mobile device, a user terminal, a terminal, a wireless communication device, a user agent, or a user apparatus.

To clearly describe technical solutions in embodiments of this application, in embodiments of this application, a word such as "example" or "for example" is used to represent an example, an illustration, or a description. Any embodiment or design solution described as "exemplarily" or "for example" in this application should not be construed as being preferred or advantageous over other embodiments or design solutions. Exactly, use of the words such as "example" or "for example" is intended to present a related concept in a specific manner.

In the embodiments of this application, "at least one" refers to one or more, and "a plurality of" refers to two or more. "And/or" describes an association relationship between associated objects, and indicates that three relationships may exist. For example, A and/or B may represent the following cases: Only A exists, both A and B exist, and only B exists. A and B each may be singular or plural. The character "/" usually represents an "or" relationship between associated objects. "At least one of the following items" or a similar expression thereof indicates any combination of these items, including a single item or any combination of a plurality of items. For example, at least one of a, b, or c may represent a, b, c, a and b, a and c, b and c, or a, b, and c, where a, b, and c may be singular or plural.

It should be noted that in embodiments of this application, "when ... " may be an instantaneous occurrence time of a case, or may be a period of time after occurrence of a case, and this is not specifically limited in embodiments of this application. In addition, a display interface provided in embodiments of this application is merely an example, and the display interface may further include more or less content.

A user may share information such as a picture and a file by using the electronic device. For example, the electronic device may interact with a gallery application by using a social application, and deliver a photo in the gallery application to the social application. For another example, the electronic device may interact with a file management application by using a social application, and deliver a file in the file management application to the social application.

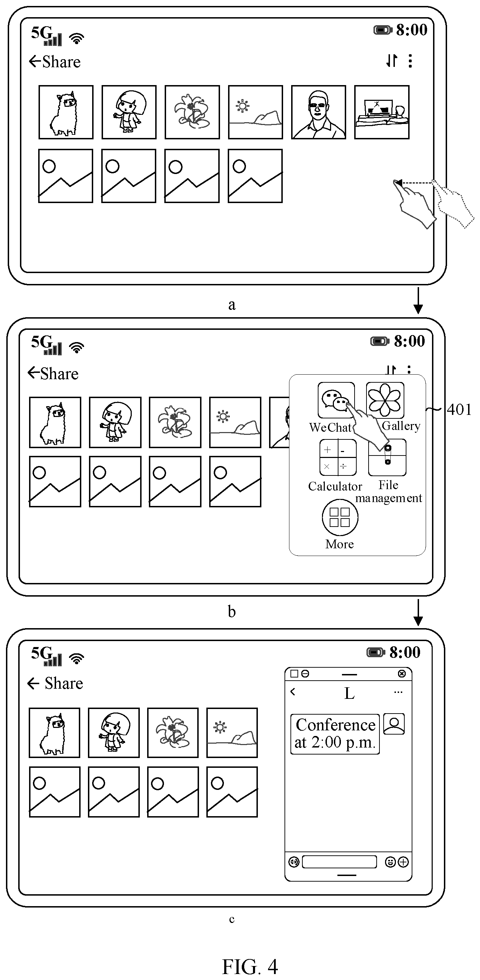

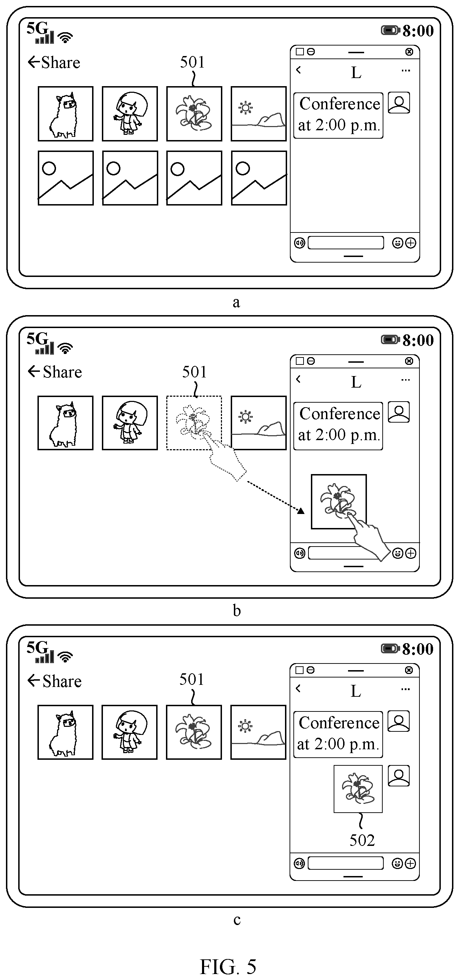

An example in which the electronic device is a pad and a picture is shared by using the pad is used below to describe an information exchange process between two application s in a possible implementation with reference to FIG. 4 and FIG. 5.

The electronic device may display a gallery application interface. For example, the gallery application interface is an interface shown in a of FIG. 4. The interface shown in a of FIG. 4 includes a plurality of pictures.

The electronic device may display interfaces of a plurality of application s in a form of a floating window and/or a split-screen window. An example in which the electronic device invokes a floating window is used. In the interface shown in a of FIG. 4, when the electronic device receives a trigger operation of sliding leftward from a right side of a screen, the electronic device may enter an interface shown in b of FIG. 4.

In the interface shown in b of FIG. 4, the electronic device displays a sidebar 401. The sidebar 401 displays icons of a plurality of application s, for example, an icon of a social application, an icon of a gallery application, an icon of a calculator application, an icon of a file management application, and an icon of a More application. The sidebar 401 may be used for displaying an application in a form of a floating window. For example, when the electronic device receives a trigger operation on an icon of a social application in the sidebar 401, the electronic device may display an interface shown in c of FIG. 4. In the interface shown in c of FIG. 4, the electronic device may display a full-screen window of a gallery application and display a floating window of a social application.

After the electronic device simultaneously displays windows of two or more application s, the electronic device may copy a picture of an application to another application through a drag operation.

For example, the electronic device may display an interface shown in a of FIG. 5. The interface shown in a of FIG. 5 displays a full-screen window of a gallery application and a floating window of a social application. The full-screen window of the gallery application includes a plurality of pictures, for example, a picture 501.

The electronic device receives a drag operation on the picture 501. The drag operation on the picture 501 may include a press down operation and a slide operation on the picture 501. During this period, the touch object does not leave the touchscreen. In response to the press down operation on the picture 501, the picture 501 may be in a selected state, as shown in an interface shown in b of FIG. 5. When the touch object starts to move, the picture 501 moves as the touch object moves. When the electronic device detects that the touch object drags the picture 501 into the floating window of the social application, and the touch object performs a lift operation, the electronic device may display an interface shown in c of FIG. 5.

In the interface shown in c of FIG. 5, the electronic device may display the picture 501 in a deselected state in a full-screen window and display a picture 502 in a floating window. Content in the picture 502 is the same as content in the picture 501.

Operations in the interface shown in a of FIG. 5 to the interface shown in c of FIG. 5 may be understood as follows: The picture 501 in the gallery application is copied to the social application, and the picture 501 is shared with another user by using the social application.

After entering any album of the gallery application, the electronic device may display a plurality of pictures. When a user shares a picture with another user by using the electronic device, the user needs to search a plurality of pictures for a target picture. When the current album does not include the target picture, the electronic device further needs to return to a previous level and enter another album, so that the user continues to search for the target picture.

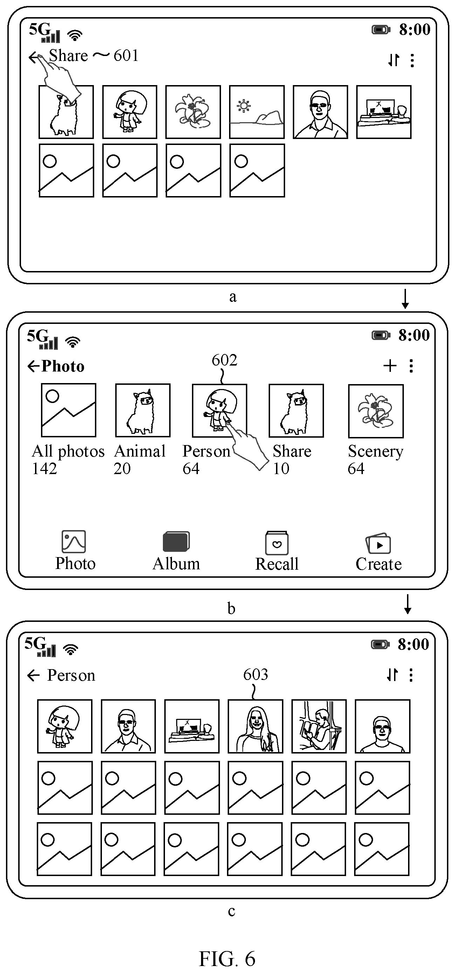

The process may be, for example, shown in FIG. 6: The current album may be a "share" album, and the electronic device may display a plurality of pictures in the "share" album, and display a back button 601, as shown in an interface shown in a of FIG. 6. The plurality of pictures in the interface shown in a of FIG. 6 do not include the target picture. The electronic device receives a trigger operation on the back button 601, and in response to the trigger operation, the electronic device may return to a previous-level interface, for example, an interface shown in b of FIG. 6.

In the interface shown in b of FIG. 6, the electronic device may display a plurality of albums, for example, an "all photos" album, an "animal" album, a "person" album 602, a "share" album, a "scenery" album, and the like. When the electronic device receives a trigger operation on the "person" album 602, the electronic device may enter an interface shown in c of FIG. 6. In the interface shown in c of FIG. 6, the electronic device may display a plurality of pictures in the "person" album. The "person" album includes a target picture 603.

When the gallery application stores many pictures and/or many albums, the user may need to go through the process from the interface shown in a of FIG. 6 to the interface shown in c of FIG. 6 for many times, to obtain the target picture, and then share the target picture based on the process from the interface shown in a of FIG. 5 to the interface shown in c of FIG. 5. A process in which the electronic device shares a file is similar. It can be seen that in a possible implementation, an operation of sharing a picture by the electronic device is relatively complex, and user experience is relatively poor.

In view of this, an embodiment of this application provides a touch method. Pictures included in a plurality of albums are viewed by using a hover operation without entering an album, so as to quickly find a target picture and share the target picture, reduce processes of entering and exiting an album, and simplify user operations. Similarly, files included in a plurality of folders are viewed by using a hover operation without entering a folder, so as to quickly find a target file and share the target file, reduce processes of entering and exiting a folder, simplify user operations, and improve user experience.

In this embodiment of this application, the touch object can perform a hover operation based on a user operation, and the electronic device may invoke a first-level floating window and a second-level floating window based on the hover operation. An example in which the touch object capable of triggering the hover operation is a stylus is used. The first-level floating window may be used for temporarily previewing and displaying pictures and/or files in an album and/or a folder. When the stylus hovers, the electronic device may display the first-level floating window in a process of performing the hover operation. When the stylus gets away from the touchscreen and the hover operation is suspended, the electronic device may cancel displaying the first-level floating window, where display duration of the first-level floating window is related to duration of the hover operation. The first-level floating window may include a switch control, and the electronic device may switch the first-level floating window to the second-level floating window based on the switch control.

The electronic device may preview and display pictures and/or files in an album and/or a folder in the second-level floating window. Display duration of the second-level floating window may be unrelated to the duration of the hover operation. For example, after the electronic device displays the second-level floating window, the stylus may get away from the touchscreen, and suspend the hover operation. In this case, the electronic device still displays the second-level floating window, and displaying the second-level floating window is not canceled as the hover operation ends.

Specifically, the second-level floating window may include a top bar, a cancel button, a minimize button, a maximize button, a bottom bar, and the like. The top bar may be used for adjusting a position of the second-level floating window. The cancel button may be used for closing the second-level floating window, the minimize button may be used for hiding the second-level floating window, the maximize button may be used for switching the second-level floating window to the full-screen window, and the bottom bar may be used for exiting the second-level floating window or switching the second-level floating window to the full-screen window. The electronic device may implement, based on the foregoing buttons, operations such as moving the second-level floating window, closing the second-level floating window, hiding the second-level floating window, and displaying the second-level floating window in full screen. The foregoing buttons are described in detail subsequently in the embodiments of this application, and details are not described herein.

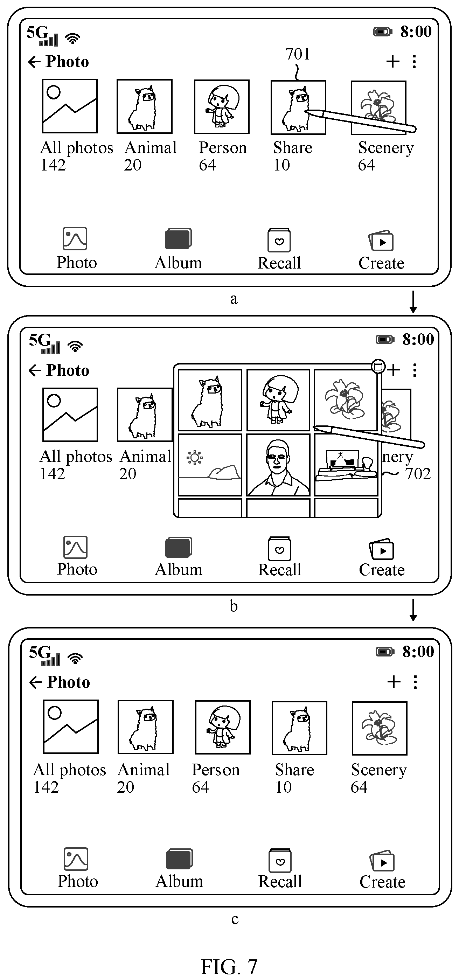

An example in which the first-level floating window and the second-level floating window are used for previewing pictures in an album is used. The first-level floating window in the embodiments of this application is first described below with reference to FIG. 7 to FIG. 9.

FIG. 7 is a schematic diagram of an interface of invoking a first-level floating window according to an embodiment of this application. As shown in FIG. 7:

The electronic device may display a gallery application interface. For example, the gallery application interface may be an interface shown in a of FIG. 7. In the interface shown in a of FIG. 7, the electronic device displays a plurality of albums, for example, an "all photos" album, an "animal" album, a "person" album, a "share" album 701, a "scenery" album, and the like. In the interface shown in a of FIG. 7, below an icon of each album, the quantity of pictures in the album is included. When the electronic device receives a hover operation by the stylus on the "share" album 701, the electronic device may display an interface shown in b of FIG. 7 in response to the operation.

In the interface shown in b of FIG. 7, the electronic device may display a first-level floating window 702. The first-level floating window 702 may include one or more pictures under the "share" album 701, for example, 6 pictures are displayed in the first-level floating window 702.

During performing the hover operation by the stylus based on an operation by the user, the electronic device may keep displaying the interface shown in b of FIG. 7. In the interface shown in b of FIG. 7, the electronic device displays the first-level floating window 702. After the stylus stops performing the hover operation based on an operation by the user, the electronic device may enter an interface shown in c of FIG. 7. In the interface shown in c of FIG. 7, the electronic device no longer displays the first-level floating window.

In a possible implementation, the electronic device may further display an album name corresponding to the first-level floating window 702 on an interface. For example, the electronic device may display an album name above the first-level floating window 702. The electronic device may further display a switch control on an interface. For example, the electronic device may display a switch control below the first-level floating window 702. The switch control may be a multi-page identifier. When the user operates the stylus to move to the top of the switch control, the electronic device may automatically switch between different albums. For example, content displayed by the first-level floating window 702 and a top album name are automatically switched. A switching interval may be a preset time length. For example, the preset time length may be 1s. This is not limited in this application.

It should be noted that, the hover operation on the "share" album 701 may be understood as follows: The stylus is located above the "share" album 701 on the touchscreen, the distance between the stylus and the touchscreen is less than a first distance threshold, and the stylus does not contact the touchscreen. In some embodiments, the electronic device may trigger the hover operation when the position of the stylus satisfies the foregoing conditions. In some other embodiments, to reduce incorrect triggering of the hover operation, the electronic device may alternatively trigger the hover operation after the time during which the position of the stylus satisfies the foregoing conditions reaches a first time threshold. The first time threshold may be, for example, 1s.

In this embodiment of this application, after the first-level floating window is invoked, the stylus needs to maintain the hover operation. When the distance between the stylus and the touchscreen is greater than the first distance threshold, the nib of the stylus is moved out of an area in which the first-level floating window is located, or another blank area outside the first-level floating window is tapped, the hover operation is stopped, and the electronic device cancels displaying the first-level floating window. In addition, during hover of the stylus, the stylus is in contact with the touchscreen, and the electronic device may jump from the first-level floating window to a next-level interface. For example, the stylus taps any picture in the first-level floating window based on an operation by the user, and the electronic device may display the picture in full screen. The operation may be, for example, a tap operation on the picture 501 in the interface shown in a of FIG. 5.

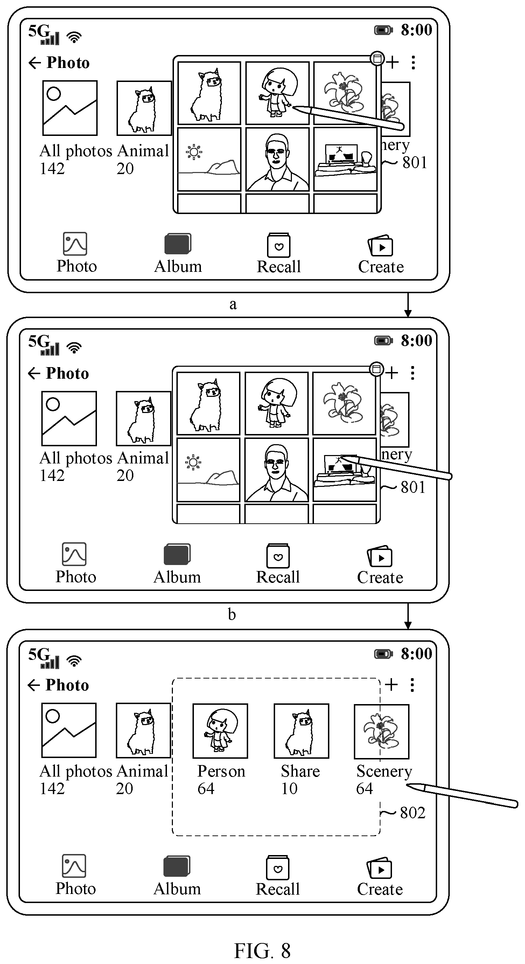

In some embodiments, the stylus may move in the first-level floating window based on an operation by the user. After the stylus moves out of the first-level floating window, the electronic device also cancels displaying the first-level floating window. The moving process may be shown in FIG. 8:

When the first-level floating window is invoked, a position of the stylus may correspond to a position of the "share" album. For example, in an interface shown in a of FIG. 8, a position corresponding to the nib of the stylus is a position of the "share" album at a lower layer of a first-level floating window 801 (the "share" album is not shown in the interface shown in a of FIG. 8, and for the position of the "share" album, refer to a position of the "share" album 701 in the interface shown in a of FIG. 7).

After the first-level floating window 801 is invoked, the stylus may keep floating above the touchscreen and move in an area in which the first-level floating window 801 is located. In this process, the distance between the stylus and the touchscreen is less than the first distance threshold, and the stylus does not contact the touchscreen. As shown in an interface b of FIG. 8, the position of the stylus changes. In a period in which the stylus performs the hover operation and the movement operation in the area in which the first-level floating window 801 is located, the electronic device keeps displaying the first-level floating window 801.

During a movement process of the stylus, a position of the stylus may move out of the area in which the first-level floating window is located. For example, in an interface shown in c of FIG. 8, a position of a dashed-line box 802 is a position of the first-level floating window 801, the stylus is not in the dashed-line box 802, and the electronic device cancels displaying the first-level floating window 801.

It may be understood that, this embodiment of this application describes the solution of this embodiment of this application by using an example in which the stylus performs a hover operation on the "share" album. The stylus may also perform a hover operation on another album, to trigger a first-level floating window of the another album. For example, when the electronic device receives a hover operation by the stylus on a "person" album, the electronic device may display a first-level floating window of the "person" album. For the process, refer to the embodiments shown in FIG. 7 and FIG. 8. Details are not described in this embodiment of this application.

In this way, the electronic device may preview a plurality of albums in the interface shown in a of FIG. 7 by using the first-level floating window, so that it is convenient for the user to find a target picture quickly. The user does not need to perform the operation of entering or exiting an album for a plurality of times, thereby simplifying an operation of searching for a target picture by the user, and improving user experience.

In this embodiment of this application, the first-level floating window may display some or all pictures in an album. When there is a relatively small quantity of pictures in an album, the electronic device may display all pictures in the album. For example, the first-level floating window may display 6 pictures, and when the quantity of pictures in an album is less than or equal to 6, the first-level floating window may present all pictures in the album. When there is a relatively large quantity of pictures in an album, the electronic device may display some pictures in the album. For example, when the quantity of pictures in an album is greater than 6, the first-level floating window may present some pictures in the album.

For a case in which there are a large quantity of pictures in an album, the embodiments of this application provide two manners of presenting more pictures in a first-level floating window. In a first possible implementation, the electronic device may display more pictures in the first-level floating window according to a slide-up operation by the user in the first-level floating window. In a second possible implementation, the electronic device may switch the first-level floating window to a second-level floating window, and more pictures may be presented in the second-level floating window.

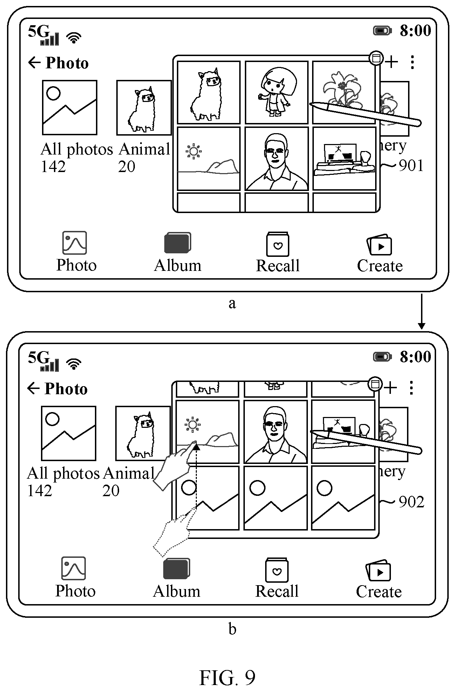

The first possible implementation is first described below with reference to FIG. 9. As shown in FIG. 9:

After the electronic device receives a hover operation on a "share" album, the electronic device may display an interface shown in a of FIG. 9. The interface includes a first-level floating window 901. The first-level floating window 901 may preferentially display the first 6 pictures in the "share" album according to an arrangement sequence. For example, an arrangement sequence of pictures in the "share" album may be shown in the interface a of FIG. 4. The first 6 images are displayed in the first-level floating window 901.

When the electronic device receives a slide-up operation in the first-level floating window 901, pictures in the first-level floating window move with movement of a finger, as shown in an interface shown in b of FIG. 9. In the interface shown in b of FIG. 9, the electronic device may display a first-level floating window 902. Compared with pictures in the first-level floating window 901, pictures in the first-level floating window 902 move upward, to present a plurality of pictures that are later in the arrangement sequence. The slide-up operation may be an operation that the finger of the user touches the touchscreen and generates displacement.

It should be noted that, the interface shown in b of FIG. 9 displays two touch objects: the stylus and the finger, which may be understood as follows: The stylus performs a hover operation based on an operation by the user, to trigger displaying and keep displaying the first-level floating window; and the finger performs a slide-up operation, to trigger scrollable presentation of pictures in the first-level floating window. In this process, the user may hold, according to a usage habit, the stylus with the left hand and perform a slide operation with the right hand; or the user may hold, according to a usage habit, the stylus with the right hand and perform a slide operation with the left hand.

In some embodiments, when the user performs the foregoing operation, the following some scenarios may occur due to incorrect triggering:

In a first incorrect triggering scenario, the user performs a hover operation on the "share" album by using the stylus, and the electronic device displays the first-level floating window 901 of the "share" album, as shown in the interface shown in a of FIG. 9. During displaying the first-level floating window 901, the user intends to use a finger to slide up to browse more pictures in the first-level floating window. However, the distance between the stylus and the touchscreen may be greater than the first distance threshold, the stylus may be moved out of an area in which the first-level floating window is located, or another blank area outside the first-level floating window is tapped incorrectly. In this scenario, the electronic device may cancel displaying the first-level floating window.

To reduce misoperations by the user, the electronic device may display the first-level floating window for a period of time after the user performs a misoperation, and close the first-level floating window with a delay. The delay time may be, for example, two seconds. During the delay time, if the electronic device receives a slide operation by the user in the first-level floating window, the electronic device displays more pictures in the first-level floating window in response to the slide operation. After the user ends the slide operation, the electronic device may reset the delay time. If no trigger operation is received within the delay time, the first-level floating window disappears. During the delay time, if the electronic device receives no slide operation by the user in the first-level floating window, the electronic device cancels displaying the first-level floating window when the delay time is reached. In this way, in a case of a misoperation, the user can still browse the first-level floating window for a period of time and view all pictures in the first-level floating window. The user does not need to perform a hover operation again to view pictures in an album again, thereby simplifying user operations and improving user experience.

In a second incorrect triggering scenario, the user performs a hover operation on the "share" album by using the stylus, and the electronic device displays the first-level floating window 901 of the "share" album, as shown in the interface shown in a of FIG. 9. In a process in which the user uses the finger to slide up to browse more pictures in the first-level floating window, the distance between the stylus and the touchscreen may be greater than the first distance threshold, the stylus may be moved out of an area in which the first-level floating window is located, or another blank area outside the first-level floating window is tapped incorrectly. In this scenario, the electronic device may cancel displaying the first-level floating window.

To reduce misoperations by the user, in the foregoing case in which the finger of the user slides in the first-level floating window and the stylus suspends the hover operation, the electronic device may display the first-level floating window. When the user stops performing the slide operation and the finger leaves the first-level floating window, the electronic device may cancel displaying the first-level floating window. In this way, in a case of a misoperation, the user can still browse the first-level floating window for a period of time and view all pictures in the first-level floating window. The user does not need to perform a hover operation again to view pictures in an album again, thereby simplifying user operations and improving user experience.

Optionally, in some embodiments, the stylus may move in the electronic device. When the stylus performs a slide-up action in the first-level floating window based on an operation by the user, the electronic device may also enter the interface shown in b of FIG. 9 from the interface shown in a of FIG. 9. An operation manner of displaying pictures in the first-level floating window in a scrolling manner is not limited in this embodiment of this application.

In this way, the electronic device may display more pictures by using a slide-up operation or a slide-down operation in the first-level floating window, to make it convenient for the user to view all pictures in an album, thereby improving user experience.

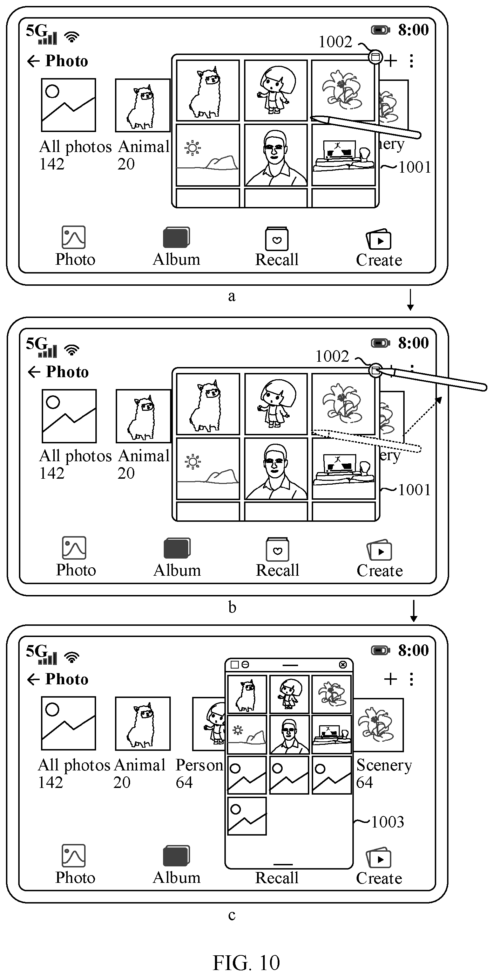

The second possible implementation in the embodiments of this application is described below with reference to FIG. 10. As shown in FIG. 10:

After the electronic device receives a hover operation on a "share" album, the electronic device may display an interface shown in a of FIG. 10. The interface includes a first-level floating window 1001. The first-level floating window 1001 includes a switch button 1002. The switch button 1002 may be used for instructing to switch a first-level floating window to a second-level floating window.

When receiving a movement operation by a stylus in the first-level floating window 1001, the electronic device keeps displaying the first-level floating window 1001, as shown in an interface shown in b of FIG. 10. The stylus moves to a position of the switch button 1002, and performs a tap operation on the switch button 1002. In response to the operation, the electronic device enters an interface shown in c of FIG. 10.

In the interface shown in c of FIG. 10, the electronic device may display a second-level floating window 1003. The second-level floating window 1003 includes a plurality of pictures in a "share" album. The quantity of pictures that can be displayed by the second-level floating window 1003 is greater than the quantity of pictures that can be displayed by the first-level floating window 1001. For example, the first-level floating window 1001 includes 6 pictures, and the quantity of pictures in the second-level floating window 1003 is greater than 6.

In this embodiment of this application, after the first-level floating window is switched to the second-level floating window, the electronic device can display the second-level floating window, and keeps displaying the second-level floating window without a hover operation using the stylus. For example, in the interface shown in c of FIG. 10, the stylus stops performing the hover operation, and the electronic device still displays the second-level floating window 1003.

It may be understood that, in this embodiment of this application, both the first-level floating window and the second-level floating window may be used for previewing pictures in an album. A dimension of the first-level floating window may be different from a dimension of the second-level floating window. For example, a dimension of the first-level floating window 1001 in the interface shown in b of FIG. 10 is different from a dimension of the second-level floating window 1003 in the interface shown in c of FIG. 10. A dimension of the first-level floating window may alternatively be the same as a dimension of the second-level floating window. This is not limited in this embodiment of this application.

Moreover, in this embodiment of this application, a dimension of the second-level floating window may be the same as a dimension of a floating window of an application. For example, a dimension of a floating window of a social application in the interface shown in c of FIG. 4 is the same as a dimension of the second-level floating window 1003 in the interface shown in c of FIG. 10.

In this embodiment of this application, the first-level floating window may be used for temporarily previewing and displaying pictures in an album. After the stylus stops the floating operation, the first-level floating window is no longer displayed. To make it convenient for the user to preview a picture in an album, the first-level floating window may magnify the picture in the album. For example, a dimension of a picture in the first-level floating window may be greater than a dimension of a picture in the second-level floating window, a dimension of a picture in the first-level floating window may be greater than or equal to a dimension of a picture in a gallery application interface, and the gallery application interface may be, for example, the interface shown in a of FIG. 4.

It should be noted that, in this embodiment of this application, the electronic device may switch the first-level floating window to a second-level floating window by using a switch button. After the first-level floating window is switched to the second-level floating window, the user may not perform a hover operation by using the stylus. In this way, user operations can be further simplified. In addition, the electronic device may display more pictures by using the second-level floating window, to make it convenient for the user to view all pictures in an album, thereby improving user experience.

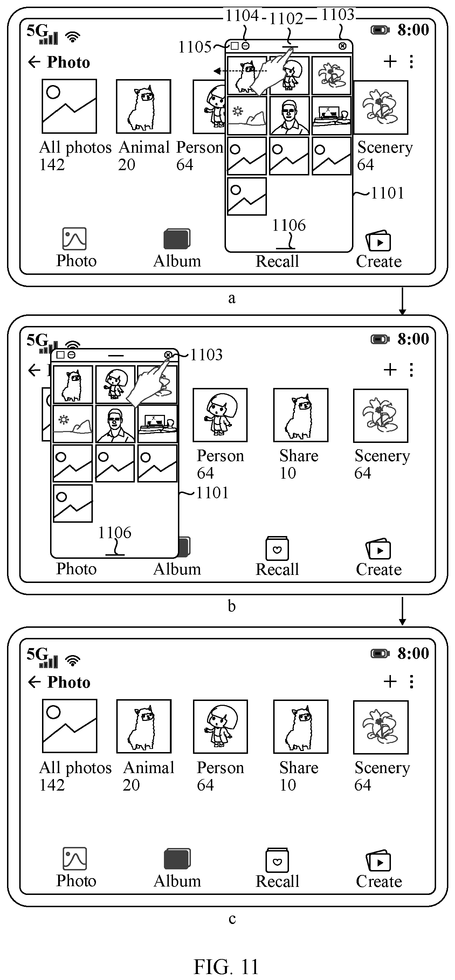

The following describes functions of buttons in a second-level floating window with reference to FIG. 11. As shown in FIG. 11:

After the electronic device switches a first-level floating window to a second-level floating window, the electronic device may display an interface shown in a of FIG. 11. In the interface shown in a of FIG. 11, a second-level floating window 1101 is displayed. The second-level floating window 1101 includes a top bar 1102, a cancel button 1103, a minimize button 1104, a maximize button 1105, and a bottom bar 1106.

Specifically, in the interface shown in a of FIG. 11, when the electronic device receives a drag operation on the top bar 1102, the electronic device may control the second-level floating window 1101 to move with a finger. After the finger leaves the touchscreen, the second-level floating window 1101 may be displayed at a position of the finger when the finger is lifted, as shown in an interface in b of FIG. 11. In the interface shown in b of FIG. 11, the second-level floating window 1101 moves from the right side of the screen to the left side of the screen.

In the interface shown in b of FIG. 11, when the electronic device receives a tap operation on the cancel button 1103, the electronic device may exit the second-level floating window 1101, and skip displaying the second-level floating window 1101, as shown in an interface shown in c of FIG. 11.

Alternatively, in the interface shown in b of FIG. 11, when the electronic device receives a slide-up operation on the bottom bar 1106, the electronic device may exit the second-level floating window 1101, and skip displaying the second-level floating window 1101, as shown in an interface shown in c of FIG. 11.

Optionally, when the electronic device receives a tap operation on the maximize button 1105, or receives a slide down operation on the bottom bar, the electronic device may switch the second-level floating window to the full-screen window. For example, the electronic device switches from the interface shown in b of FIG. 11 to the interface shown in a of FIG. 4.

Optionally, when the electronic device receives a tap operation on the minimize button 1104, the electronic device may hide the second-level floating window 1106. For example, the second-level floating window (not shown in FIG. 11) is displayed on a side of the screen in a form of a floating ball.

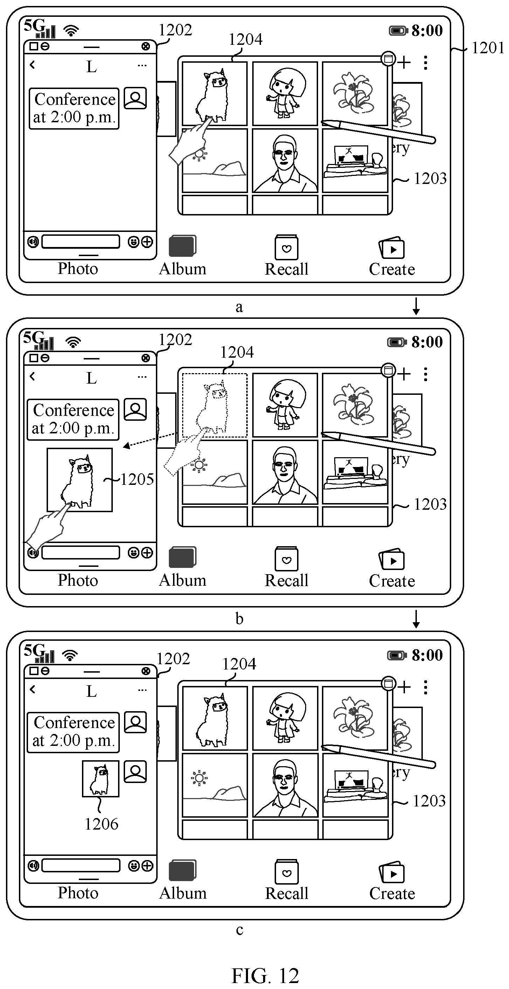

The foregoing embodiments briefly describe styles and functions of a first-level floating window and a second-level floating window provided in the embodiments of this application. An application scenario of the first-level floating window and/or the second-level floating window is described below with reference to FIG. 12 to FIG. 15.

In this embodiment of this application, the electronic device may transmit data between a plurality of application s by using the first-level floating window, and the data may include a picture. Using an example in which a picture is transmitted from a gallery application to a social application, FIG. 12 is a schematic diagram of an interface of applying a first-level floating window according to an embodiment of this application. As shown in FIG. 12:

A social application and a gallery application may run on the electronic device. The electronic device displays a full-screen window of the gallery application and displays a floating window of the social application. After receiving a hover operation by the stylus on a "share" album, the electronic device may display an interface shown in a of FIG. 12.

The interface shown in a of FIG. 12 may include a full-screen window 1201 of a gallery application, a floating window 1202 of a social application, and a first-level floating window 1203.

The floating window 1202 of the social application may be a floating window invoked based on, for example, the sidebar 401 in the embodiment shown in FIG. 4, or may be a floating window disposed in another manner. The first-level floating window 1203 includes one or more pictures of the "share" album. For example, the first-level floating window 1203 includes a picture 1204. It may be understood that, the floating window 1202 of the social application and the first-level floating window 1203 may be displayed at an upper layer of the full-screen window 1201 of the gallery application. The full-screen window 1201 of the gallery application may be, for example, the interface shown in a of FIG. 7.

When the electronic device receives a drag operation on the picture 1204 in the first-level floating window 1203, the electronic device may display an interface shown in b of FIG. 12. When the user performs a press down operation on the picture 1204 and generates displacement, the picture 1204 (a dashed-line picture in the interface shown in b of FIG. 12) may be highlighted at a position of the picture 1204 before being moved, and a picture 1205 that moves with the finger may be displayed. Content in the picture 1205 is the same as content in the picture 1204.

Highlighting the picture 1204 may be used for indicating that the current picture 1204 is being operated. Highlighting the picture 1204 may be that a color of the picture 1204 is different from a color of another picture, the picture 1204 includes a frame, a mask layer is added to an upper layer of the picture 1204, and/or transparency of the picture 1204 is different from transparency of another picture.

If the drag operation continuously acts on the picture 1205, the electronic device may receive a drag operation of dragging the picture 1205 from the first-level floating window 1203 to the floating window 1202 of the social application by the user (in this case, the finger does not leave the touchscreen). The picture 1205 is located in the floating window 1202 of the social application.

After the finger leaves the touchscreen (the drag operation ends), the electronic device may share the picture to the social application. For example, the electronic device displays an interface shown in c of FIG. 12. In the interface, highlighting the picture 1204 is canceled in the first-level floating window 1203, and a picture 1206 is displayed in the floating window 1202 of the social application. Content in the picture 1206 is the same as content in the picture 1204, and the picture 1206 may be understood as a picture obtained by copying and sharing the picture 1204 to the social application.

Afterward, the stylus may also get away from the screen, move to a place near another album, and perform a hover operation to open the another album. The foregoing process is repeated, to share content of the another album.

It should be noted that, in the embodiment shown in FIG. 12, the hover operation by the stylus and the displaying the first-level floating window are synchronous. The interface shown in a of FIG. 12 to the interface shown in c of FIG. 12 each include the first-level floating window 1203. Therefore, in this process, the stylus keeps the hover operation.

In this way, the first-level floating window can support the user in quickly browsing pictures in a plurality of albums to obtain a target picture and share the target picture. The user no longer needs an operation of searching for a target picture similar to that in the embodiment shown in FIG. 6, nor needs to share the target picture after opening a specific album similar to that in the embodiment shown in FIG. 5, thereby shortening a picture delivery path, simplifying user operations, and improving user experience.

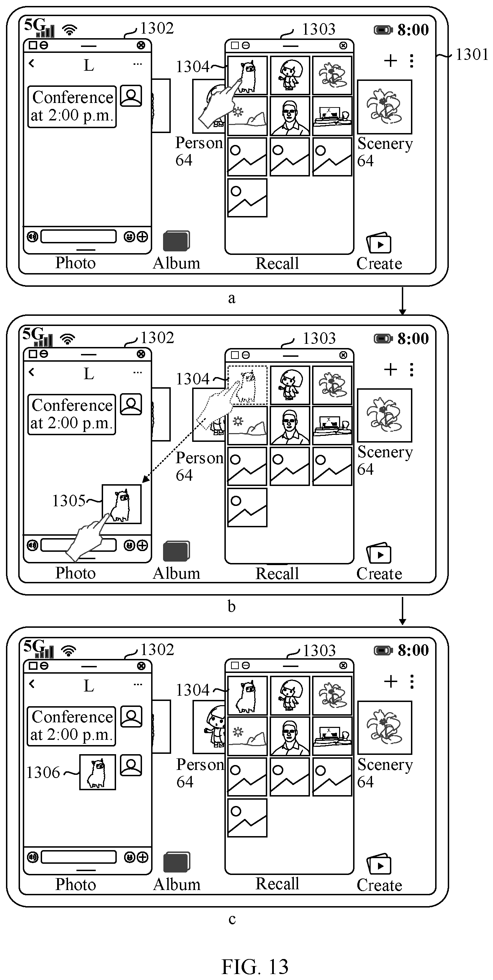

In this embodiment of this application, the electronic device may also transmit data between a plurality of application s by using the second-level floating window. Using an example in which a picture is transmitted from a gallery application to a social application, FIG. 13 is a schematic diagram of an interface of applying a second-level floating window according to an embodiment of this application. As shown in FIG. 13:

A social application and a gallery application may run on the electronic device. The electronic device displays a full-screen window of the gallery application and displays a floating window of the social application. After receiving a tap operation on a switch button in the first-level floating window, the electronic device may display an interface shown in a of FIG. 13.

The interface shown in a of FIG. 13 may include a full-screen window 1301 of a gallery application, a floating window 1302 of a social application, and a second-level floating window 1303. The second-level floating window 1303 includes one or more pictures of the "share" album. For example, the second-level floating window 1303 includes a picture 1304.

When the electronic device receives a drag operation on the picture 1304 in the second-level floating window 1303, the electronic device may display an interface shown in b of FIG. 13. When the user performs a press down operation on the picture 1304 and generates displacement, the picture 1304 (a dashed-line picture in the interface shown in b of FIG. 13) may be highlighted at a position of the picture 1304 before being moved, and a picture 1305 that moves with the finger may be displayed. Content in the picture 1305 is the same as content in the picture 1304.

If the drag operation continuously acts on the picture 1305, the electronic device may receive a drag operation of dragging the picture 1305 from the second-level floating window 1303 to the floating window 1302 of the social application by the user (in this case, the finger does not leave the touchscreen). The picture 1305 is located in the floating window 1302 of the social application.

After the finger leaves the touchscreen (the drag operation ends), the electronic device may share the picture to the social application. For example, the electronic device displays an interface shown in c of FIG. 13. In the interface, highlighting the picture 1304 is canceled in the second-level floating window 1303, and a picture 1306 is displayed in the floating window 1302 of the social application. Content in the picture 1306 is the same as content in the picture 1304, and the picture 1306 may be understood as a picture obtained by copying and sharing the picture 1304 to the social application.

It should be noted that, in this embodiment of this application, the electronic device may first start the floating window 1302 of the social application, and then invoke the second-level floating window 1303 by using the first-level floating window. The electronic device may alternatively first invoke the second-level floating window 1303 by using the first-level floating window, and then start the floating window 1302 of the social application. This is not limited in this embodiment of this application. In addition, in the embodiment shown in FIG. 13, when the stylus does not maintain the hover operation, the electronic device can still display the second-level floating window, which can further reduce user operations in an image transmission process between a plurality of applications.

In this embodiment of this application, the user may use the first-level floating window and the second-level floating window together. For example, the first-level floating window may support temporary preview and display, and the user may perform a hover operation on a plurality of albums by using the stylus, to quickly view pictures in the albums. After the album in which the target picture is located is found, the first-level floating window may be switched to the second-level floating window by using the switch button. Then, the user may drag the target picture in the second-level floating window to the floating window of the social application for sharing.

In this way, the second-level floating window can support the user in quickly browsing pictures in a plurality of albums to obtain a target picture and share the target picture. The user no longer needs an operation of searching for a target picture similar to that in the embodiment shown in FIG. 6, nor needs to share the target picture after opening a specific album similar to that in the embodiment shown in FIG. 5, thereby shortening a picture delivery path, simplifying user operations, and improving user experience.

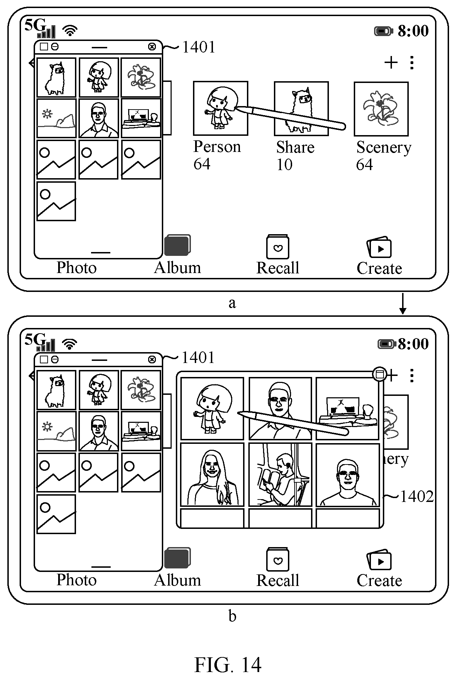

In this embodiment of this application, the electronic device may further simultaneously display a first-level floating window and a second-level floating window. There may be one or more second-level floating windows. FIG. 14 is a schematic diagram of an interface of simultaneously displaying a first-level floating window and a second-level floating window according to an embodiment of this application. As shown in FIG. 14:

The electronic device may switch the first-level floating window to the second-level floating window by using a switch button. The process may be similar to that described in the related descriptions in the embodiment shown in FIG. 10. The electronic device may display an interface shown in a of FIG. 14. The interface shown in a of FIG. 14 may include a second-level floating window 1401. The second-level floating window 1401 may be used for previewing pictures in a "share" album.

When the electronic device receives a hover operation by the stylus on a "person" album, the electronic device may enter an interface shown in b of FIG. 14. The interface includes a second-level floating window 1401 and a first-level floating window 1402. The first-level floating window 1402 may be used for previewing pictures in the "person" album.

In this embodiment of this application, an initial position of the second-level floating window may be related to a position of the first-level floating window. For example, in the interface shown in b of FIG. 10, the position of the first-level floating window 1001 and the position of the second-level floating window 1003 in the interface shown in c of FIG. 10 are approximately the same, and are both on the right side of the touchscreen.

In some scenarios, the position of the second-level floating window may affect preview of another album. In this case, the position of the second-level floating window may be adjusted based on operations in the interface shown in a of FIG. 11 and the interface shown in b of FIG. 11. For example, in the embodiment shown in FIG. 14, the initial position of the second-level floating window 1401 may correspond to the interface shown in a of FIG. 11; and the initial position of the second-level floating window 1401 obstructs the "person" album. When the user intends to preview the "person" album, the user may move the second-level floating window 1401 by using a top bar in the second-level floating window 1401, to reduce blocking on the to-be-previewed album. For example, in the interface shown in a of FIG. 14, the second-level floating window 1401 is located in a left area of the touchscreen, and does not obstruct the to-be-previewed album (for example, the "character" album).

In some embodiments, there may be no overlapping area between the second-level floating window and the first-level floating window. For example, when a second-level floating window or another floating window is displayed on an interface, the electronic device receives a hover operation on the "person" album, and in response to the operation, the electronic device may display a first-level floating window of the "person" album in an area outside the second-level floating window. For example, in the interface shown in b of FIG. 14, there is no overlapping area between the first-level floating window 1402 and the second-level floating window 1401.

In some other embodiments, there may alternatively be an overlapping area between a second-level floating window and a first-level floating window, and the first-level floating window is located in the second-level floating window. Subsequently, the user may adjust a position of the second-level floating window. This is not limited in this embodiment of this application.

In this way, when another floating window is displayed on the electronic device, the first-level floating window may be preferentially displayed, to temporarily preview a plurality of albums.

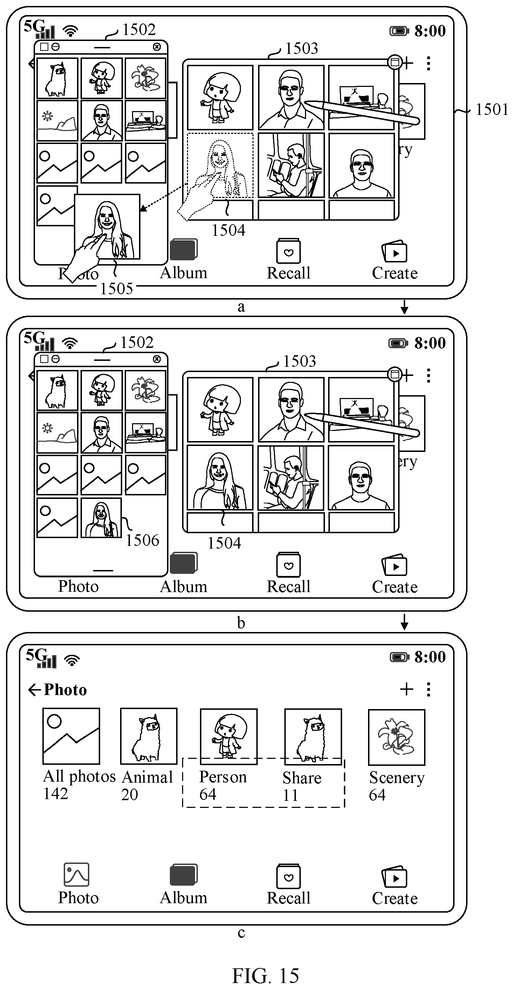

Based on the embodiment shown in FIG. 14, the electronic device may implement a transmission process of pictures in different albums of a same application by using a first-level floating window and/or a second-level floating window. As shown in FIG. 15:

A gallery application may run on the electronic device. The electronic device displays a full-screen window of the gallery application and displays a second-level floating window of a "share" album. After receiving a hover operation by the stylus on a "person" album, the electronic device may display an interface shown in a of FIG. 15.

The interface shown in a of FIG. 15 may include a full-screen window 1501 of the gallery application, a second-level floating window 1502, and a first-level floating window 1503. The second-level floating window 1502 and the first-level floating window 1503 are respectively preview floating windows of different albums. Specifically, the second-level floating window 1502 includes one or more pictures of the "share" album; and the first-level floating window 1503 includes one or more pictures of the "person" album.

When the electronic device receives a drag operation on the picture 1504 in the first-level floating window 1503, the electronic device may display an interface shown in a of FIG. 15. When the user performs a press down operation on the picture 1504 and generates displacement, the picture 1504 (a dashed-line picture in the interface shown in a of FIG. 15) may be highlighted at a position of the picture 1504 before being moved, and a picture 1505 (a solid-line picture in the interface shown in a of FIG. 15) that moves with the finger may be displayed. Content in the picture 1505 is the same as content in the picture 1504.

If the drag operation continuously acts on the picture 1505, the electronic device may receive a drag operation of dragging the picture 1505 from the first-level floating window 1503 to the second-level floating window 1502 by the user (in this case, the finger does not leave the touchscreen). The picture 1505 is located in the second-level floating window 1502.

After the finger leaves the touchscreen (the drag operation ends), the electronic device may copy pictures in the "person" album to the "share" album. For example, the electronic device displays an interface shown in b of FIG. 15. In the interface, highlighting the picture 1504 is canceled in the first-level floating window 1503, and a picture 1506 is displayed in the second-level floating window 1502. Content in the picture 1506 is the same as content in the picture 1504, and the picture 1506 may be understood as a picture obtained by copying the picture 1504 to the "share" album.

After the first-level floating window 1503 and the second-level floating window 1502 are closed, the electronic device may display a gallery application interface, for example, an interface shown in c of FIG. 15, the quantity of pictures in the "person" album is 64, the quantity of pictures in the "share" album is 11, and the quantities of pictures may be shown in a dashed-line box in the interface shown in c of FIG. 15. It can be found by comparison with the interface shown in a of FIG. 7 that, in the interface shown in c of FIG. 15, the quantity of pictures in the "person" album remains unchanged, and the quantity of pictures in the "share" album increases, indicating that the pictures in the "person" album have been copied to the "share" album.

It should be noted that, this embodiment of this application describes a technical solution of the embodiments of this application by using one first-level floating window and one second-level floating window as an example. In actual application, the electronic device may alternatively start a plurality of second-level floating windows, to implement information exchange between a plurality of albums. This is not limited in this embodiment of this application.

In this way, the electronic device may implement a picture transmission process between a plurality of albums of a same application by using the first-level floating window and/or the second-level floating window. The user may conveniently sort albums based on the foregoing process without repeatedly entering and/or exiting between a plurality of albums, thereby simplifying user operations and improving user experience.

The foregoing embodiment uses an example in which a first-level floating window and a second-level floating window are used for previewing pictures in an album, to describe the first-level floating window and the second-level floating window. In this embodiment of this application, the first-level floating window and the second-level floating window may be further used for previewing a file in a folder.

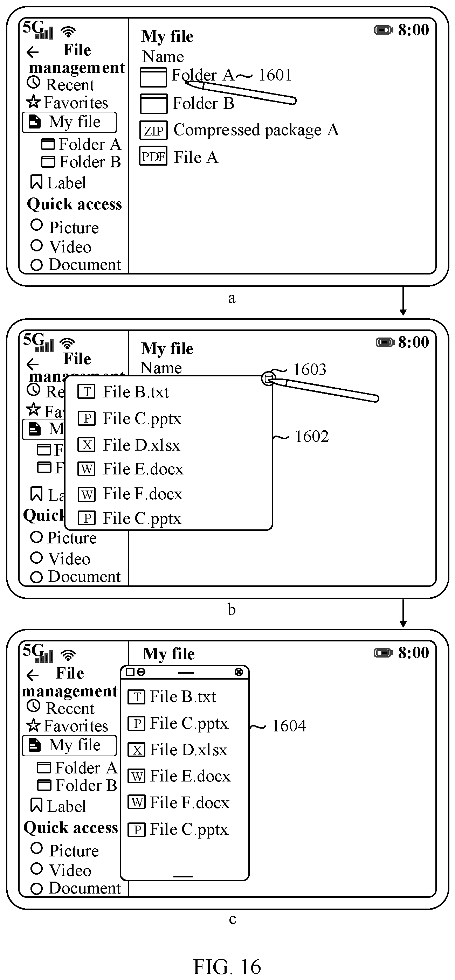

The first-level floating window and the second-level floating window in the embodiments of this application are first described below with reference to FIG. 16.

The electronic device may display a file management application. For example, an interface of the file management application may be an interface shown in a of FIG. 16. In the interface shown in a of FIG. 16, the electronic device may display a folder, various files, and the like. For example, the interface includes a folder A 1601, a folder B, a compressed package A, and a file A.

When the electronic device receives a hover operation by the stylus on the folder A 1601, the electronic device may display an interface shown in b of FIG. 16. In the interface shown in b of FIG. 16, the electronic device may display a first-level floating window 1602. A switch button 1603 is displayed in the first-level floating window 1602. The first-level floating window 1602 may include a plurality of files in the folder A. For example, 5 files are displayed in the first-level floating window 1602.

During performing the hover operation by the stylus based on an operation by the user, the electronic device may keep displaying the interface shown in b of FIG. 16. The hover operation on the folder A 1601 may be understood as follows: The stylus is located above the folder A 1601 on the touchscreen, the distance between the stylus and the touchscreen is less than a first distance threshold, and the stylus does not contact the touchscreen.

The stylus may perform a movement operation while performing the hover operation. When receiving a movement operation by a stylus in the first-level floating window 1602, the electronic device keeps displaying the first-level floating window 1602, as shown in an interface shown in b of FIG. 16. The stylus moves to a position of the switch button 1603, and performs a tap operation on the switch button 1603. In response to the operation, the electronic device enters an interface shown in c of FIG. 16.

In the interface shown in c of FIG. 16, the electronic device may display a second-level floating window 1604. The second-level floating window 1604 includes a plurality of files in the folder A 1601. The quantity of files that can be displayed by the second-level floating window 1604 is greater than the quantity of files that can be displayed by the first-level floating window 1602. For example, 5 files can be displayed in the first-level floating window 1602, and the quantity of files that can be displayed by the second-level floating window 1604 is greater than 5.

In this embodiment of this application, after the first-level floating window is switched to the second-level floating window, the electronic device can display the second-level floating window, and keeps displaying the second-level floating window without a hover operation using the stylus. For example, in the interface shown in c of FIG. 16, the stylus cancels performing the hover operation, and the electronic device still displays the second-level floating window 1604.

It may be understood that, in this embodiment of this application, the first-level floating window and the second-level floating window may be both used for previewing a file in a folder. A dimension of the first-level floating window may be different from a dimension of the second-level floating window. For example, a dimension of the first-level floating window 1602 in the interface shown in b of FIG. 16 is different from a dimension of the second-level floating window 1604 in the interface shown in c of FIG. 16. A dimension of the first-level floating window may alternatively be the same as a dimension of the second-level floating window. This is not limited in this embodiment of this application.

In this embodiment of this application, the first-level floating window may be used for temporarily previewing and displaying a file in a folder. After the stylus stops the floating operation, the first-level floating window is no longer displayed. To make it convenient for the user to preview a file in a folder, the first-level floating window may magnify information about the file in the folder. For example, dimensions of an icon and a filename of a file in the first-level floating window may be greater than dimensions of an icon and a filename of a file in the second-level floating window.

It may be understood that, the previewing a file in a folder shown in this embodiment of this application may be previewing a filename and an icon in the folder, to make it convenient for the user to view which files are stored in the current folder. The filename is used for marking the file, and the icon may be used for representing a format of the file. In this embodiment of this application, the first-level floating window may not display specific content in a file. In some embodiments, when a tap operation on any file is received in the first-level floating window, the electronic device may open the file, and display specific content in the file.

In this embodiment of this application, the first-level floating window and the second-level floating window of the folder are shown only by way of example. For related functions of some first-level floating windows and second-level floating windows, refer to the related descriptions of the first-level floating window and the second-level floating window of the album, for example, the related descriptions in the embodiments shown in FIG. 7 to FIG. 11. Details are not described in this embodiment of this application again.

It should be noted that, in this embodiment of this application, the electronic device may switch the first-level floating window to a second-level floating window by using a switch button. After the first-level floating window is switched to the second-level floating window, the user may not perform a hover operation by using the stylus. In this way, user operations can be further simplified. In addition, the electronic device may display more pictures by using the second-level floating window, to make it convenient for the user to view all file information in a folder, thereby improving user experience.

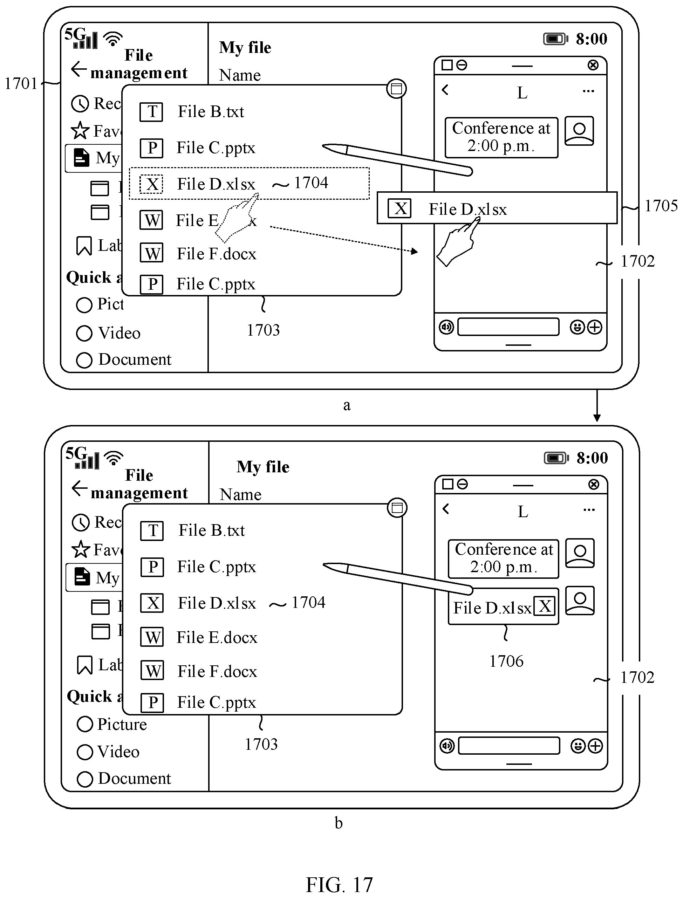

In this embodiment of this application, the electronic device may transmit data between a plurality of application s by using the first-level floating window. The following uses an example in which a file is transmitted from a file management application to a social application. FIG. 17 is a schematic diagram of an interface of applying a first-level floating window according to an embodiment of this application. As shown in FIG. 17:

A social application and a file management application may run on the electronic device. The electronic device displays a full-screen window of the file management application and displays a floating window of the social application. After receiving a hover operation by the stylus on a folder A, the electronic device may display an interface shown in a of FIG. 17.

The interface shown in a of FIG. 17 may include a full-screen window 1701 of the file management application, a floating window 1702 of the social application, and a first-level floating window 1703. The first-level floating window 1703 includes a plurality of files in the folder A. For example, the first-level floating window 1703 includes a file D 1704.

When the electronic device receives a drag operation on the file D 1704 in the first-level floating window 1703, the electronic device may display an interface shown in a of FIG. 17. When the user performs a press down operation on the file D 1704 and generates displacement, the file D 1704 (a dashed-line file in the interface shown in b of FIG. 17) may be highlighted at a position of the file D 1704 before being moved, and a file D 1705 that moves with the finger may be displayed. A filename and an icon of the file D 1705 are the same as a filename and an icon of the file D 1704.

If the drag operation continuously acts on the file D 1705, the electronic device may receive a drag operation of dragging the file D 1705 from the first-level floating window 1703 to the floating window 1702 of the social application by the user (in this case, the finger does not leave the touchscreen). The file D 1705 is located in the floating window 1702 of the social application.

After the finger leaves the touchscreen (the drag operation ends), the electronic device may share the file to the social application. For example, the electronic device displays an interface shown in b of FIG. 17. In the interface, highlighting the file D 1704 is canceled in the first-level floating window 1703, and a file D 1706 is displayed in the floating window 1702 of the social application. A filename and an icon of the file D 1706 are the same as a filename and an icon of the file D 1704.

In this way, the first-level floating window can support the user in quickly browsing files in a plurality of folders to obtain a target file and share the target file, thereby shortening a picture delivery path, simplifying user operations, and improving user experience.

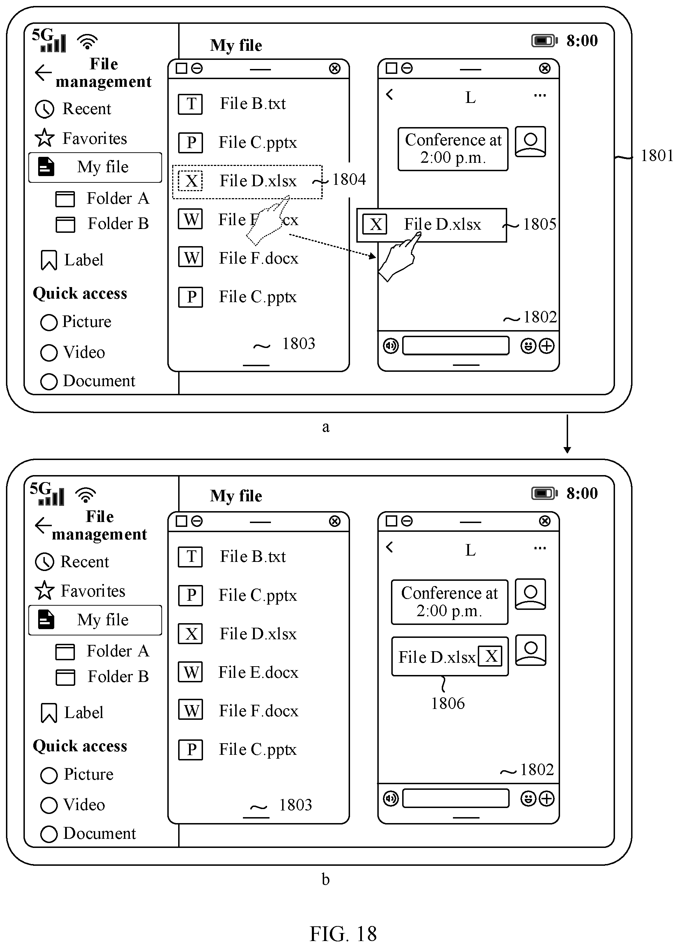

In this embodiment of this application, the electronic device may also transmit data between a plurality of application s by using the second-level floating window. An example in which a file is transmitted from a file management application to a social application is used. FIG. 18 is a schematic diagram of an interface of applying a second-level floating window according to an embodiment of this application. As shown in FIG. 18:

A social application and a file management application may run on the electronic device. The electronic device displays a full-screen window of the file management application and displays a floating window of the social application. After receiving a tap operation on a switch button in the second-level floating window, the electronic device may display an interface shown in a of FIG. 18.

The interface shown in a of FIG. 18 may include a full-screen window 1801 of the file management application, a floating window 1802 of the social application, and a second-level floating window 1803.

The second-level floating window 1803 includes a plurality of files in the folder A. For example, the second-level floating window 1803 includes a file D 1804.

When the electronic device receives a drag operation on the file D 1804 in the second-level floating window 1803, the electronic device may display an interface shown in a of FIG. 18. When the user performs a press down operation on the file D 1804 and generates displacement, the file D 1804 (a dashed-line file in the interface shown in b of FIG. 18) may be highlighted at a position of the file D 1804 before being moved, and a file D 1805 that moves with the finger may be displayed. A filename and an icon of the file D 1805 are the same as a filename and an icon of the file D 1804.

If the drag operation continuously acts on the file D 1805, the electronic device may receive a drag operation of dragging the file D 1805 from the second-level floating window 1803 to the floating window 1802 of the social application by the user (in this case, the finger does not leave the touchscreen). The file D 1805 is located in the floating window 1802 of the social application.

After the finger leaves the touchscreen (the drag operation ends), the electronic device may share the file to the social application. For example, the electronic device displays an interface shown in b of FIG. 18. In the interface, highlighting the file D 1804 is canceled in the second-level floating window 1803, and a file D 1806 is displayed in the floating window 1802 of the social application. The file D 1806 may be understood as a file obtained by copying and sharing the file D 1804 to the social application.

In this way, the second-level floating window can support the user in quickly browsing files in a plurality of folders to obtain a target file and share the target file, thereby shortening a picture delivery path, simplifying user operations, and improving user experience.

It should be noted that, in this embodiment of this application, the electronic device may also use the first-level floating window and the second-level floating window to implement a file transmission process in different folders in the file management application. For the process, refer to the related descriptions in the embodiment shown in FIG. 15, and details are not described herein again. In addition, an application used for image transmission in this embodiment of this application may be a gallery application and a social application, or may be another application. An application used for file transmission in this embodiment of this application may be a file management application and a social application, or may be another application. This is not limited in this embodiment of this application.

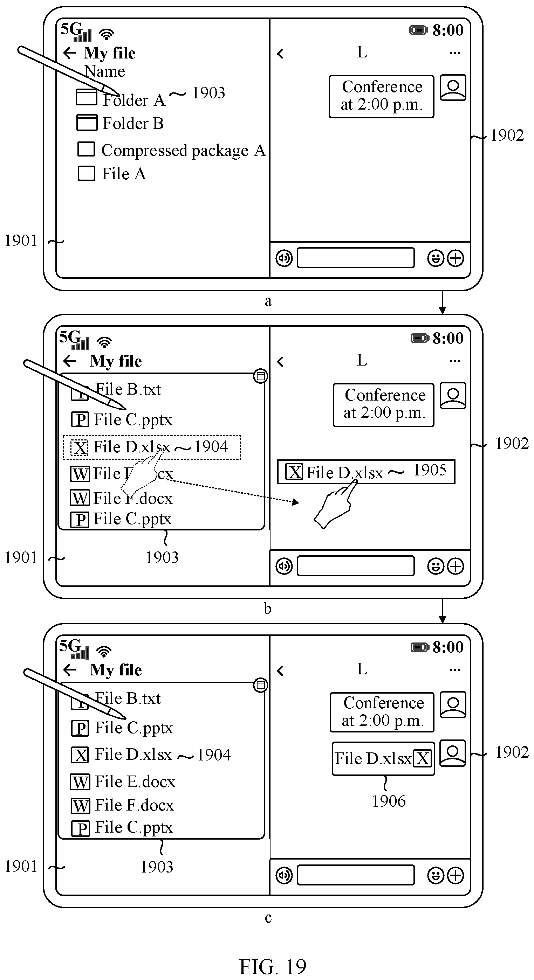

In the foregoing embodiments, the solutions are described by using a form in which one application is a floating window and the other application is a full-screen window. In actual application, interaction between a plurality of applications may also be performed in a form of a split-screen window. Information interaction between split-screen windows may be, for example, shown in FIG. 19:

Exemplarily, the electronic device may display an interface of a file management application and an interface of a social application in a split-screen form. An interface shown in a of FIG. 19 includes a split-screen window 1901 of the file management application and a split-screen window 1902 of the social application. A plurality of folders and files are displayed in the split-screen window 1901 of file management. For example, the split-screen window 1901 of file management includes a folder A 1903.

When the electronic device receives a hover operation by the stylus on the folder A 1903, the electronic device may display a first-level floating window 1903, as shown in an interface b in FIG. 19. The first-level floating window 1903 includes a plurality of files in the folder A 1903. For example, the first-level floating window 1903 includes a file D 1904.

When the electronic device receives a drag operation on the file D 1904 in the first-level floating window 1903, the electronic device may display an interface shown in b of FIG. 19. When the user performs a press down operation on the file D 1904 and generates displacement, the file D 1904 (a dashed-line picture in the interface shown in b of FIG. 19) may be highlighted, and a file D 1905 that moves with the finger may be displayed. A filename and an icon of the file D 1905 are the same as a filename and an icon of the file D 1904.

If the drag operation continuously acts on the file D 1905, the electronic device may receive a drag operation of dragging the file D 1905 from the first-level floating window 1903 to the split-screen window 1902 of the social application by the user (in this case, the finger does not leave the touchscreen). The file D 1905 is located in the split-screen window 1902 of the social application.

After the finger leaves the touchscreen (the drag operation ends), the electronic device may share the file to the social application. For example, the electronic device displays an interface shown in c of FIG. 19. In the interface, highlighting the file D 1904 is canceled in the first-level floating window 1903, and a file D 1906 is displayed in the split-screen window 1902 of the social application. A filename and an icon of the file D 1906 are the same as a filename and an icon of the file D 1904.

This embodiment of this application describes a process of performing file transmission based on a first-level floating window in a split-screen window. It may be understood that, in this embodiment of this application, the electronic device also supports file and/or picture transmission by using a second-level floating window under a split-screen window. For the process, refer to the related descriptions in the embodiments shown in FIG. 12 to FIG. 18, and details are not described herein again.

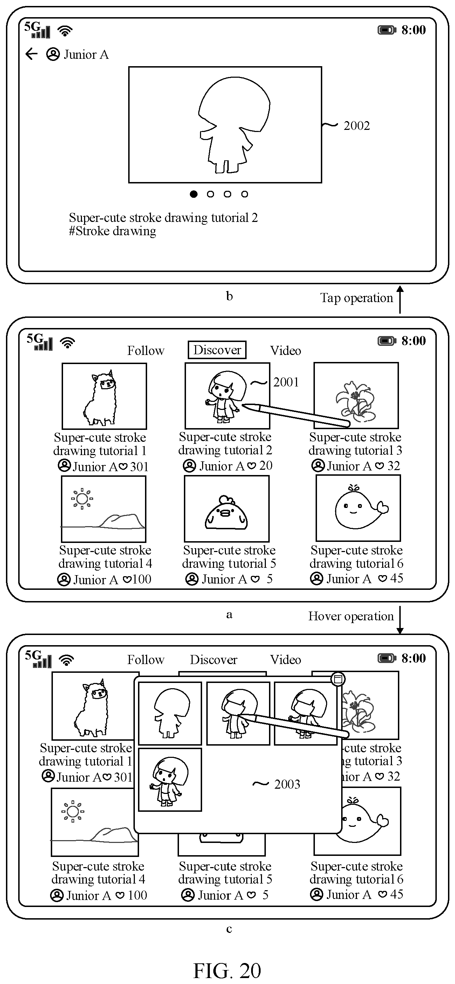

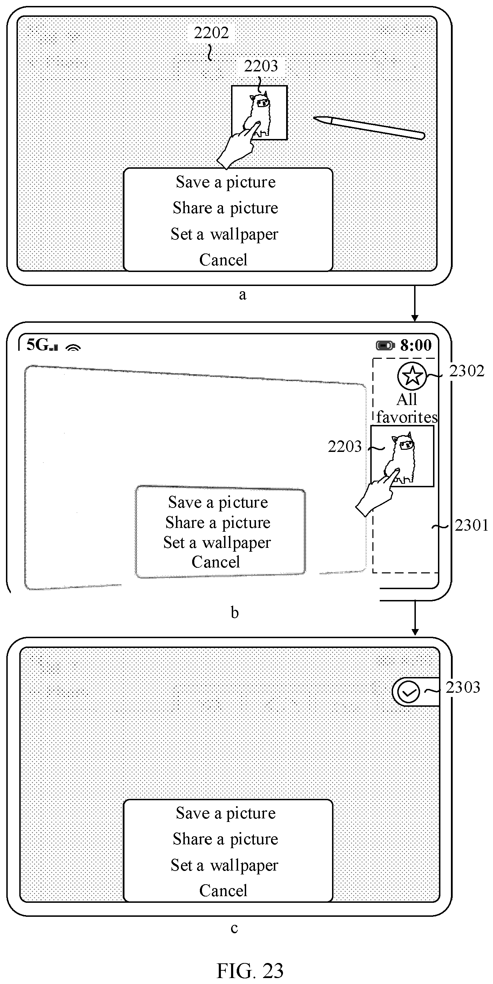

Optionally, in this embodiment of this application, the first-level floating window and the second-level floating window may also be used in other scenarios. The following uses a first-level floating window as an example, and describes other applicable scenarios of the first-level floating window and the second-level floating window in this embodiment of this application with reference to FIG. 20 and FIG. 23.

In some embodiments, the first-level floating window and the second-level floating window may be further used for previewing a plurality of pictures in a picture and text application. As shown in FIG. 20:

The electronic device may display an interface of the picture and text application, for example, an interface shown in a of FIG. 20. The interface shown in a of FIG. 20 includes a plurality of picture and text links, and any picture and text link corresponds to a picture and text, for example, a picture and text link 2001. In the picture and text application, when the electronic device receives a tap operation on any picture and text link, the electronic device may jump to a corresponding web page interface. The web page interface may involve a plurality of pictures and related text. The web page interface may display one picture, and the user may view another picture on the web page interface by sliding left or right or sliding up or down.

For example, after receiving a tap operation on the picture and text link 2001, the electronic device may display an interface shown in b of FIG. 20. The interface shown in b of FIG. 20 may be a web page interface corresponding to the picture and text link 2001. In this interface, the electronic device displays a picture 2002, and the user may view a next picture by sliding the picture 2002 leftward.

In this embodiment of this application, the electronic device may implement a function of quickly viewing a picture in a picture and text link by using a first-level floating window. Exemplarily, in the interface shown in a of FIG. 20, when the electronic device receives a hover operation by the stylus on the picture and text link 2001, the electronic device may display an interface shown in c of FIG. 20. In the interface shown in c of FIG. 20, the electronic device may display a first-level floating window 2003. The first-level floating window 2003 includes a plurality of pictures corresponding to the picture and text link 2001.

It should be noted that, in this embodiment of this application, an example of the picture and text application is an application Rednote, and the picture and text application may alternatively be a reading application, a shopping application, a browser application, or the like.

In this embodiment of this application, the first-level floating window 2003 may be used for previewing a picture in a picture and text link, and can omit an operation of taping and opening a web page interface of a picture and text link by the user and sliding to view the pictures, thereby simplifying user operations and quickly viewing the pictures.

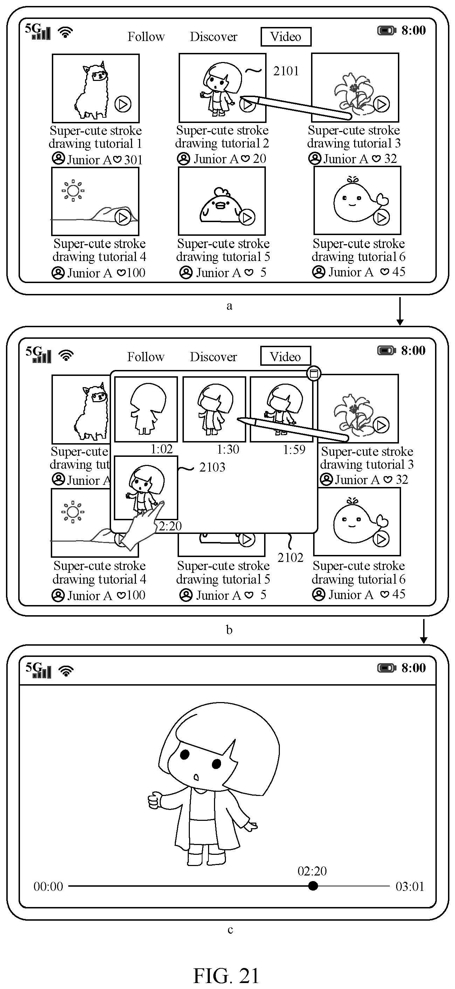

In some other embodiments, the first-level floating window and the second-level floating window may be further used for segmenting and previewing a video in a video application. As shown in FIG. 21:

The electronic device may display an interface of the video application, for example, an interface shown in a of FIG. 21. The interface shown in a of FIG. 21 includes a plurality of videos, for example, a video 2101. In the video application, when the electronic device receives a tap operation on any video, the electronic device may play the video.

In this embodiment of this application, the electronic device may implement a function of quickly segmenting and viewing a video by using a first-level floating window. Exemplarily, in the interface shown in a of FIG. 21, when the electronic device receives a hover operation by the stylus on the video 2101, the electronic device may display an interface shown in b of FIG. 21. In the interface shown in b of FIG. 21, the electronic device may display a first-level floating window 2102. The first-level floating window 2102 includes a plurality of frames of pictures, such as a picture 2103, in the video.

It may be understood that, in this embodiment of this application, a picture in the first-level floating window 2102 may be understood as follows: Frame extraction processing is performed on the video 2101, to obtain a plurality of pictures in the video 2101.

In the interface shown in b of FIG. 21, when the electronic device receives a tap operation on the picture 2103 in the first-level floating window 2102, the electronic device may display an interface shown in c of FIG. 21. In the interface shown in c of FIG. 21, the electronic device may play the video 2101, and a time of a play progress bar corresponds to the picture 2103. For example, the picture 2103 is a picture at 2:30 in the video 2101, and the time of the play progress bar is 2:30.

In this embodiment of this application, the first-level floating window 2102 may be used for segmenting and previewing a video, which can save an operation of sliding a progress bar to view each segment of the video by the user after taping and opening the video, thereby simplifying user operations, and quickly viewing the video.

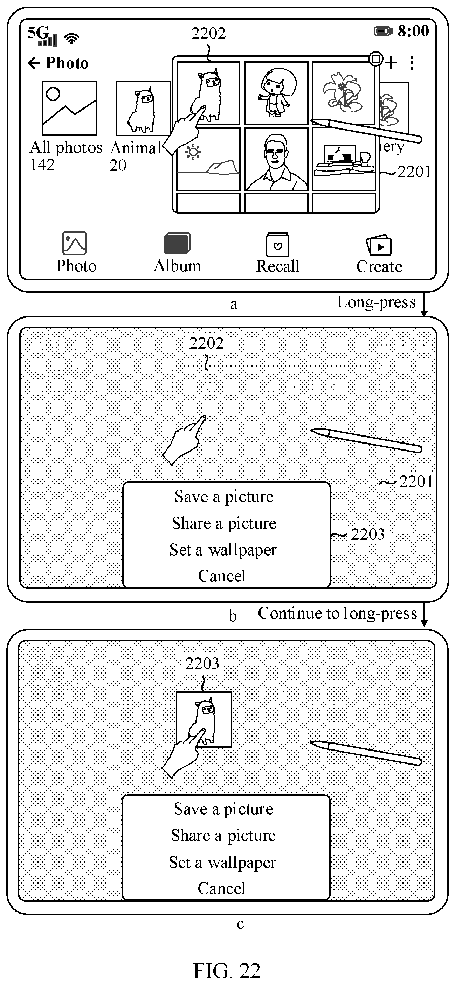

In some other embodiments, the electronic device may deliver a picture or file in the first-level floating window and/or the second-level floating window based on a toolbar. As shown in FIG. 22:

Exemplarily, after displaying the gallery application interface, the electronic device may receive a hover operation performed by a stylus on an album. In response to the operation, the electronic device displays an interface shown in a of FIG. 22. The interface includes a first-level floating window 2201. A plurality of pictures are displayed in the first-level floating window 2201. For example, the first-level floating window 2201 includes a picture 2202.

When the electronic device receives a long-press operation on the picture 2202, the electronic device may enter an interface shown in b of FIG. 22. In the interface shown in b of FIG. 22, a pop-up window 2203 may be displayed, and a gallery application interface in a gray state (the gallery application interface in the gray state may be a dotted filling interface in the interface shown in b of FIG. 22) may be displayed. The pop-up window 2203 may be located at an upper layer of the first-level floating window 2201. The pop-up window 2203 is used for indicating an operation that can be performed on a picture. For example, the pop-up window 2203 includes a picture save button, a picture share button, a wallpaper set button, and a cancel button. The buttons are respectively used to save the picture 2202, share the picture 2202, set the picture 2202 as a wallpaper, and cancel an operation on the picture 2202.

The long-press operation may be understood as that a press-down operation is performed on the picture 2202, and a press-down time exceeds a second time threshold. In a process in which the electronic device continuously displays the interface shown in b of FIG. 22, the user continuously performs a long-press operation on the picture 2202 (in this process, the finger of the user does not leave the touchscreen, and is not displaced). In this case, in response to the long-press operation performed continuously by the user on the picture 2202, the electronic device may enter an interface shown in c of FIG. 22.

In the interface shown in c of FIG. 22, the picture 2203 may be at an upper layer of the gallery application interface in a gray state. Content of the picture 2203 may be the same as that of the picture 2202, and the picture 2202 may be located at a lower layer of the picture 2203. In this case, the picture 2203 may move with movement of the finger.

For example, after the finger drags the picture 2203 to move, the electronic device may display an interface shown in a of FIG. 23. The picture 2203 moves from the picture 2202 to a current position. As a drag operation by the finger continuously acts on the picture 2203, the picture 2203 may be moved to an edge area close to the touchscreen, where the edge area is, for example, a right side. When a distance between the picture 2203 and a right edge of the touchscreen is less than a second distance threshold, the electronic device may display an interface shown in b of FIG. 23.

In the interface shown in b of FIG. 23, the electronic device displays a toolbar 2301 (an area shown by a dashed-line box in the figure). The toolbar 2301 is configured to store an element. For example, the element includes a file, a picture, text, and the like. An icon 2302 of all favorites and/or favorites folders of other categories may be displayed in the toolbar 2301.

When the electronic device receives an operation of dragging the picture 2203 into the toolbar 2301 and releasing the hand by the user, the electronic device may add the picture 2203 to favorites in the toolbar, and the electronic device displays an interface shown in c of FIG. 23. The interface shown in c of FIG. 23 may include an identifier 2303 indicating that favorites adding is completed.

Subsequently, when running, for example, a social application, the electronic device may invoke the toolbar, and drag a picture in the toolbar from the toolbar to the social application, so that the social application obtains the picture. In this way, the electronic device may share the picture to the toolbar by using the first-level floating window, and deliver the picture to other applications by using the toolbar, thereby implementing cross-application transmission of the picture.

In this embodiment of this application, another application scenario of a first-level floating window is described by using the first-level floating window as an example. In addition, in this embodiment of this application, functions of the foregoing embodiments may also be implemented by using a second-level floating window. For a corresponding process, refer to related descriptions in the embodiments shown in FIG. 20 to FIG. 23. Details are not described herein again in this embodiment of this application.

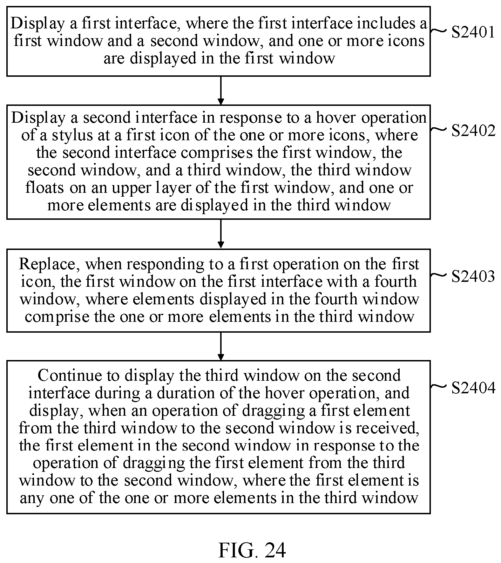

Based on the foregoing embodiments, an embodiment of this application provides a method for a touch method. Exemplarily, FIG. 24 is a schematic flowchart of a touch method according to an embodiment of this application.

As shown in FIG. 24, the touch method may be applied to an electronic device, and the method may include the following steps:

S2401. Display a first interface, where the first interface includes a first window and a second window, and one or more icons are displayed in the first window.

Exemplarily, an interface described in this embodiment of this application may be understood as a user interface (user interface, UI), and the UI interface is layout design of human computer interaction, operating logic, and interface beautification for software. The first interface may be an interface displaying a plurality of windows. The electronic device may copy or move an element from one window to another window. An icon may be a set that can store a picture, a file, and/or a video segment. For example, the icon includes an album, a folder, a video, a picture and text link, and the like.

Specifically, in a picture transmission scenario, the first window may be a window of a gallery application, the second window may be a window of a social application, and the first interface may display both the window of the gallery application and the window of the social application. For example, the first window of the first interface may be, for example, the full-screen window in the interface shown in c of FIG. 11, and the second window may be, for example, the floating window 1202 of the social application in the interface shown in a of FIG. 12 (the first interface in the picture transmission scenario is not shown in this embodiment of this application). The window of the gallery application may be a full-screen window, and the window of the social application may be a floating window; or the window of the gallery application and the window of the social application are both split-screen windows. The electronic device may pull the window of the social application in the window of the gallery application based on the method in the embodiment shown in FIG. 4; or the electronic device may display the window of the gallery application and the window of the social application in a split-screen manner.

In a file transmission scenario, the first window may be a window of a file management application, the second window may be a window of a social application, and the first interface may display both the window of the file management application and the window of the social application. For example, the first window of the first interface may be, for example, the full-screen window in the interface shown in a of FIG. 16, and the second window may be, for example, the floating window 1702 of the social application in the interface shown in a of FIG. 17 (the first interface in the file transmission scenario is not shown in this embodiment of this application).

Alternatively, the first window and the second window may be different windows of a same application. For example, the first interface may be the interface shown in a of FIG. 14. The first window may be, for example, the full-screen window of the gallery application, and the second window may be, for example, the second-level floating window 1401.

The first interface may alternatively be an interface including a window of another application, which is not listed one by one in this embodiment of this application. It may be understood that, the first window is not a bottom-layer window of an application. For example, the first window of the gallery application displays an album, but does not display a specific picture in the album. The first window of the file management application displays a folder, but does not display a specific file in the folder.

S2402. Display a second interface in response to a hover operation by a stylus at a first icon of the one or more icons, where the second interface includes the first window, the second window, and a third window, the third window floats at an upper layer of the first window, and one or more elements are displayed in the third window.

It may be understood that, a change of layout design in an interface will bring a new interface. For example, the first interface may be an interface including a first window and a second window, and a new third window appears on the second interface. The first interface and the second interface are different in layout, and therefore may be distinguished by using different interface names.

The hover operation may be an operation used for triggering the first-level floating window in this embodiment of this application. For example, the hover operation may be that a stylus is located at an icon, and a distance between the stylus and a touchscreen is less than a first distance threshold. The third window may be a first-level floating window described in this embodiment of this application, and the second interface may include the first window, the second window, and the first-level floating window. There is a correspondence between an icon and an element. For example, an icon is an album, and an element is a picture; an icon is a folder, and an element is a file; an icon is a picture and text link, and an element is a picture; and an icon is a video, and an element is a video segment.

Specifically, in a picture transmission scenario, the first icon may be used to indicate any one of albums. For example, the first icon is a "share" album. The second interface may be, for example, the interface shown in a of FIG. 12. The first window may be, for example, the full-screen window 1201 of the gallery application, the second window may be, for example, the floating window 1202 of the social application, the third window may be, for example, the first-level floating window 1203. The first-level floating window 1203 is located at an upper layer of the full-screen window 1201 of the gallery application, and the first-level floating window 1203 includes one or more pictures in the "share" album.

In a file transmission scenario, the first icon may be used to indicate any folder of folders. For example, the first icon is a folder A. The second interface may be, for example, the interface shown in a of FIG. 17. The first window may be, for example, the full-screen window 1701 of the file management application, the second window may be, for example, the floating window 1702 of the social application, the third window may be, for example, the first-level floating window 1703. The first-level floating window 1703 is located at an upper layer of the full-screen window 1701 of the file management application, and the first-level floating window 1703 includes one or more files in the folder A.

Alternatively, the first window and the second window may be different windows of a same application, as shown in the embodiment shown in FIG. 15. This is described in detail subsequently in this embodiment of this application, and details are not described herein.

S2403. Replace, when responding to a first operation on the first icon, the first window on the first interface with a fourth window, where elements displayed in the fourth window include the one or more elements in the third window.

The first operation may be a tap operation. It may be understood that, in this embodiment of this application, a response manner for the hover operation on the first icon is different from a response manner for the tap operation on the first icon. For example, under the hover operation, the electronic device may display a first-level floating window; while under the tap operation, the electronic device may display one or more elements corresponding to the first icon. For example, in the interface shown in b of FIG. 6, the first icon may be, for example, the "person" album 602, the fourth window may be, for example, the full-screen window in the interface shown in c of FIG. 6, and the fourth window includes a picture displayed in the first-level floating window 1204.

It should be noted that, step S2403 may be configured to compare with S2402 to highlight a feature of the first-level floating window after the hover operation. In an actual application scenario, after step S2402, the electronic device may perform step S2404, and skip performing step S2403. This is not limited in this embodiment of this application.

S2404. Continue to display the third window on the second interface during the hover operation, and display, when an operation of dragging a first element from the third window to the second window is received, the first element in the second window in response to the operation of dragging the first element from the third window to the second window, where the first element is any one of the one or more elements in the third window.

In this embodiment of this application, during the hover operation, the electronic device may continuously display the first-level floating window. When the hover operation ends, the electronic device cancels displaying the first-level floating window.

In a process of picture transmission, the first element may be, for example, the picture 1204 in the interface shown in a of FIG. 12. The operation of dragging the first element from the third window to the second window may be, for example, an operation of dragging the picture 1204 from the first-level floating window 1203 to the floating window 1202 of the social application in the interface shown in b of FIG. 12. The first element is displayed in the second window. For example, in the interface shown in c of FIG. 12, the floating window 1202 of the social application displays the picture 1206, and content in the picture 1206 is the same as content in the picture 1204.

In a process of file transmission, the first element may be, for example, the file D 1704 in the interface shown in a of FIG. 17. The operation of dragging the first element from the third window to the second window may be, for example, an operation of dragging the file D 1704 from the first-level floating window 1703 to the floating window 1702 of the social application in the interface shown in a of FIG. 17. The first element is displayed in the second window. For example, in the interface shown in b of FIG. 17, the floating window 1202 of the social application displays the file D 1706, and content in the file D 1704 is the same as content in the file D 1706.

In this way, a first-level floating window may support a user in quickly browsing pictures and/or files in a plurality of albums and/or folders, to obtain and share a target picture and/or a target file. The user does not need to share a target picture and/or a target file after opening a specific album and/or folder, thereby shortening a picture and/or file delivery path, simplifying user operations, and improving user experience.

In a possible implementation, a first button is further displayed in the third window, and after the continuing to display the third window on the second interface, the method further includes: receiving a trigger operation on the first button; and switching the third window to a fifth window in response to the trigger operation on the first button, where a quantity of elements presented in the fifth window is greater than or equal to a quantity of elements presented in the third window; and the third window on the second interface disappears when the hover operation ends, and the electronic device continues to display the fifth window when the hover operation ends.

The first button may be the switch button described in this embodiment of this application, and the fifth window may be, for example, the second-level floating window described in this embodiment of this application.

The switch button may be, for example, the switch button 1002 in the first-level floating window 1001 in the interface shown in a of FIG. 10. When a trigger operation on the switch button 1002 is received, the first-level floating window 1001 in the interface shown in b of FIG. 10 is switched to the second-level floating window 1003 in the interface shown in c of FIG. 10. The quantity of pictures presented in the second-level floating window 1003 is greater than or equal to the quantity of pictures presented in the first-level floating window 1001. For example, the second-level floating window 1003 has 10 pictures, and the first-level floating window 1001 has 6 pictures. When there are few pictures in the album, the quantity of pictures of the second-level floating window may be the same as the quantity of pictures of the first-level floating window.

It may be understood that, the first-level floating window and the second-level floating window may be both used for previewing an element under an icon. However, the first-level floating window is different from the second-level floating window. For example, a display process of the first-level floating window relies on a hover operation. When the hover operation ends, the first-level floating window disappears, as shown in the interface shown in c of FIG. 7 or the interface shown in c of FIG. 8. However, a display process of the second-level floating window may not rely on a hover operation. After the hover operation ends, the electronic device may continuously display the second-level floating window.

In this way, the electronic device may switch the first-level floating window to a second-level floating window by using a switch button. After the first-level floating window is switched to the second-level floating window, the user may not perform a hover operation by using the stylus, thereby further simplifying user operations. In addition, the electronic device may display more pictures and/or files by using the second-level floating window, to make it convenient for the user to view all pictures and/or files in an album and/or a folder, thereby improving user experience.

In a possible implementation, the method further includes: receiving an operation of dragging a second element from the fifth window to the second window, where the second element is any one of one or more elements in the fifth window; and displaying the second element in the second window in response to the operation of dragging the second element from the fifth window to the second window.

Based on switching the first-level floating window to the second-level floating window, the electronic device may further implement element transmission between applications based on the second-level floating window, as shown in the embodiment shown in FIG. 13 or the embodiment shown in FIG. 18.

Specifically, in a process of picture transmission, the second window may be, for example, the floating window 1302 of the social application in the interface shown in a of FIG. 13, the fifth window may be, for example, the second-level floating window 1303, and the second element may be, for example, the picture 1304 in the second-level floating window 1303. The operation of dragging the second element from the fifth window to the second window may be, for example, an operation of dragging the picture 1304 from the second-level floating window 1303 to the floating window 1302 of the social application in the interface shown in b of FIG. 13. The displaying the second element in the second window may be understood as follows: In the interface shown in c of FIG. 13, the floating window 1302 of the social application includes the picture 1306, and content in the picture 1306 is the same as content in the picture 1304.

In this way, the second-level floating window may support a user in quickly browsing pictures and/or files in a plurality of albums and/or folders, to obtain and share a target picture and/or a target file. The user does not need to share a target picture and/or a target file after opening a specific album and/or folder, thereby shortening a picture and/or file delivery path, simplifying user operations, and improving user experience.

In a possible implementation, after the switching the third window to a fifth window, the method further includes: displaying a third interface in response to a hover operation by the stylus at a second icon of the one or more icons, where the third interface includes the first window, the fifth window, and a sixth window, and one or more elements are displayed in the sixth window; and the second icon is different from the first icon; replacing, when responding to a second operation on the second icon, the first window on the third interface with a seventh window, where elements displayed in the seventh window include the one or more elements in the sixth window; and continuing to display the sixth window on the third interface during the hover operation, and displaying, when an operation of dragging a third element from the sixth window to the fifth window is received, the third element in the fifth window in response to the operation of dragging the third element from the sixth window to the fifth window; and the third element is any one of one or more elements in the fifth window.

The electronic device may further implement element transmission in a same application based on a first-level floating window and/or a second-level floating window, as shown in the embodiment shown in FIG. 14 and/or FIG. 15.

Specifically, after the first-level floating window is switched to the second-level floating window, the electronic device displays the interface shown in a of FIG. 14. A picture in the second-level floating window 1401 may be a picture under a "share" album (a first icon), a second icon may be a "person" album, and the first icon is different from the second icon.

The third interface may be, for example, the interface shown in b of FIG. 14. The first window may be, for example, the full-screen window of the gallery application. The fifth window may be, for example, the second-level floating window 1401. The sixth window may be, for example, the first-level floating window 1402. The first-level floating window 1402 includes pictures under the "person" album.

The third element is, for example, the picture 1504 in the interface shown in a of FIG. 15. The operation of dragging the third element from the sixth window to the fifth window may be, for example, an operation of dragging the picture 1504 from the first-level floating window 1503 to the second-level floating window 1502 in the interface shown in a of FIG. 15. The displaying the third element in the fifth window may be understood as follows: In the interface shown in b of FIG. 15, the second-level floating window 1502 displays the picture 1506, and content of the picture 1506 is the same as content of the picture 1504.

The second operation may be a tap operation. It may be understood that, in this embodiment of this application, a response manner for the hover operation on the second icon is different from a response manner for the tap operation on the second icon. Refer to related descriptions in step S2403, and details are not described herein again.

It should be noted that, in this embodiment of this application, element transmission in a same application is described by using picture transmission as an example. In this embodiment of this application, file transmission in a same application may also be implemented by using a first-level floating window and/or a second-level floating window. This is not limited in this embodiment of this application.

In this way, the electronic device may implement a picture and/or file transmission process between a plurality of albums and/or folders of a same application by using the first-level floating window and/or the second-level floating window. The user may conveniently sort albums and/or folders based on the foregoing process without repeatedly entering and/or exiting between a plurality of albums and/or folders, thereby simplifying user operations and improving user experience.

In a possible implementation, the hover operation by the stylus at the first icon of the one or more icons includes: the stylus is located at the first icon, and a distance between the stylus and a touchscreen of the electronic device is less than a distance threshold; and in a process of displaying the third window, if the distance between the stylus and the touchscreen is less than the distance threshold and the stylus does not contact the touchscreen, the third window continues to be displayed when the stylus moves in an area in which the third window is located.

The distance threshold may correspond to the first distance threshold in this embodiment of this application. When the height distance between the stylus and the first icon is within the distance threshold, the electronic device may recognize the hover operation, and respond to the hover operation. For a process of moving the stylus, refer to the embodiment shown in FIG. 8.

It may be understood that, in a hover process of the stylus, it is difficult for the stylus to hover at a fixed position. In this embodiment of this application, the stylus can move within a range, and the movement of the stylus does not cause the first-level floating window to disappear, so that a scenario in which a misoperation by the user closes the first-level floating window can be reduced to some extent. In addition, movement of the stylus is further used for taping a switch button and sliding up and down to preview more elements in the first-level floating window.

In this way, the electronic device can trigger the first-level floating window based on the hover operation, to temporarily preview an element in an icon.

In a possible implementation, after the displaying a second interface, the method further includes: receiving a slide operation in the third window; and displaying, in response to the slide operation, one or more elements moving with a slide position of a touch object in the third window.

For this step, refer to related descriptions in the embodiment shown in FIG. 9.

In this way, the electronic device may display more elements by using a slide-up operation or a slide-down operation in the first-level floating window, to make it convenient for the user to view all pictures corresponding to an icon, thereby improving user experience.

In a possible implementation, the touch object includes a finger of a user or the stylus; and the slide operation includes: a slide operation by the finger of the user in the third window during the hover operation; or a slide operation by the stylus in the third window during the hover operation.

Based on the embodiment shown in FIG. 9, the electronic device may provide two slide operation manners. One manner is to present more elements by using an up-and-down slide operation by a finger in the first-level floating window during displaying a first-level floating window. The other manner is to present more elements by using an up-and-down slide operation by a stylus in the first-level floating window during displaying a floating window.

In this way, the electronic device may display more elements by using a slide-up operation or a slide-down operation in the first-level floating window, to make it convenient for the user to view all pictures corresponding to an icon, thereby improving user experience.

In a possible implementation, the touch object includes the finger of the user, and the receiving a slide operation in the third window includes: in a process of displaying the third window, receiving a slide operation by the finger of the user in the third window if the distance between the stylus and the touchscreen is less than the distance threshold and the stylus does not contact the touchscreen.

This step may correspond to the embodiment shown in FIG. 9. For example, the third window may be, for example, the first-level floating window 901 in FIG. 9. The slide operation may correspond to that in the interface shown in b of FIG. 9, the stylus keeps the hover operation, and the finger performs the slide operation.

It may be understood that, in the foregoing case, the displaying, in response to the slide operation, one or more elements moving with a slide position of a touch object in the third window includes: displaying, in response to the slide operation, one or more elements moving with a slide position of a finger of the user in the third window.

In this way, the electronic device may display more elements by using a slide-up operation or a slide-down operation in the first-level floating window, to make it convenient for the user to view all pictures corresponding to an icon, thereby improving user experience.

In a possible implementation, the method further includes: continuing to display the third window when the hover operation ends in a process in which the finger of the user slides in the third window; and after the finger of the user leaves the touchscreen, causing the third window to disappear if a trigger operation by the finger of the user is not received again within first duration.

This step may correspond to a process of dealing with the second incorrect triggering scenario in the embodiment shown in FIG. 9. In a process in which the finger of the user slides, the stylus stops the hover operation due to incorrect triggering. In this case, the electronic device does not cancel displaying the first-level floating window. After the user browses all elements in the first-level floating window by sliding up and down, the finger of the user may leave the touchscreen. After the finger of the user leaves the touchscreen, the first-level floating window is still displayed for a period of time. For example, the first duration may be the delay duration described in this embodiment of this application. Only when no trigger operation is received within the delay duration, displaying the first-level floating window is canceled.

In this way, in a case of a misoperation, the user can still browse the first-level floating window for a period of time and view all pictures in the first-level floating window. The user does not need to perform a hover operation again to view pictures in an album again, thereby simplifying user operations and improving user experience.

In a possible implementation, the touch object includes the finger of the user, and the receiving a slide operation in the third window further includes: continuing to display the third window within first duration when the hover operation ends in the process of displaying the third window; and receiving a slide operation by the finger of the user in the third window within the first duration; and after the displaying one or more elements moving with a slide position of a touch object in the third window, the method further includes: when the finger of the user leaves the touchscreen, causing the third window to disappear if a trigger operation by the touch object is not received again within the first duration.

This step may correspond to a process of dealing with the first incorrect triggering scenario in the embodiment shown in FIG. 9. In a process of displaying the first-level floating window, the stylus stops the hover operation due to incorrect triggering. In this case, the electronic device does not immediately cancel displaying the first-level floating window, but displays the first-level floating window for another period of time. In this period of time, the user may slide up and down by using the finger to view more elements.

After the user browses all elements in the first-level floating window by sliding up and down, the finger of the user may leave the touchscreen. After the finger of the user leaves the touchscreen, the first-level floating window is still displayed for a period of time. For example, the first duration may be the delay duration described in this embodiment of this application. Only when no trigger operation is received within the delay duration, displaying the first-level floating window is canceled.

In this way, in a case of a misoperation, the user can still browse the first-level floating window for a period of time and view all pictures in the first-level floating window. The user does not need to perform a hover operation again to view pictures in an album again, thereby simplifying user operations and improving user experience.

In a possible implementation, that the hover operation ends includes: a distance between the stylus and the touchscreen is greater than or equal to the distance threshold, the stylus is not in the area in which the third window is located, and/or a trigger operation is received in a non-function area in the first window or the second window.

In this way, after the user finishes browsing the element in the first-level floating window of the first icon, displaying the first-level floating window may be quickly canceled by ending the hover operation, and the element in the first-level floating window of the second icon may be quickly browsed. Therefore, by displaying and canceling displaying the first-level floating window, pictures and/or files in a plurality of albums and/or folders are quickly browsed, thereby improving user experience.

In a possible implementation, a second button is further displayed in the fifth window; and after the switching the third window to a fifth window, the method further includes: displaying, if an operation of dragging the second button by the touch object is received, the fourth window moving with the slide position of the touch object.

The fifth window may be, for example, the second-level floating window 1101 in the interface shown in a of FIG. 11, and the second button may be, for example, the top bar 1102. The operation of dragging the second button by the touch object may be, for example, dragging the second-level floating window 1101 leftward in the interface shown in a of FIG. 11, or moving the second-level floating window 1101 leftward in the interface b of FIG. 11.

In this way, the user may adjust the position of the second-level floating window, to reduce obstruction of an icon or other information on a current interface by the second-level floating window, thereby improving user experience.

In a possible implementation, a third button is further displayed in the fifth window; and after the switching the third window to a fifth window, the method further includes: continuing to display the first window and skipping displaying the fifth window when a trigger operation on the third button is received.

The fifth window may be, for example, the second-level floating window 1101 in the interface shown in a of FIG. 11, and the third button may be, for example, the cancel button 1103, the minimize button 1104, or the bottom bar 1106. The electronic device may cancel displaying the second-level floating window based on the foregoing button. For example, after the cancel button 1103 is tapped, the electronic device closes the second-level floating window 1101, and continues to display the full-screen window of the gallery application. For another example, after the minimize button 1104 is tapped, the electronic device minimizes the second-level floating window 1101, and the electronic device does not display the second-level floating window 1101, and continues to display the full-screen window of the gallery application. For another example, the second-level floating window 1101 may be exited by sliding the bottom bar 1106 upward, and the electronic device does not display the second-level floating window 1101, and continues to display the full-screen window of the gallery application.

In this way, the electronic device may cancel displaying the second-level floating window by using the third button, so that the electronic device presents a window or another interface at a lower layer of the second-level floating window.

In a possible implementation, a fourth button is further displayed in the fifth window; and after the switching the third window to a fifth window, the method further includes: replacing the first window with the fifth window when a trigger operation on the fourth button is received.

The fifth window may be, for example, the second-level floating window 1101 in the interface shown in a of FIG. 11, and the fourth button may be, for example, the maximize button 1105 or the bottom bar 1106. The electronic device may magnify and display the second-level floating window based on the foregoing button. For example, after the maximize button 1105 is tapped, the electronic device may display content in the second-level floating window in full screen, as shown in the interface a in FIG. 6. For another example, after the bottom bar 1106 is slid downward, the electronic device may display content in the second-level floating window in full screen, as shown in the interface a in FIG. 6.

In this way, the electronic device may switch the second-level floating window to a full-screen window by using the fourth button, to magnify and display an element and present more details of the element.

In a possible implementation, the first window includes a window of a gallery application, and the second window includes a window of an application supporting element reception/transmission; the one or more icons include icons of one or more albums, the first icon includes an icon of a first album, and the one or more elements in the third window include one or more images in the first album; and the first element includes any one of the one or more images in the first album.

A touch method provided in an embodiment of this application may be applied to a picture transmission scenario. Refer to the related descriptions in the embodiments shown in FIG. 7 to FIG. 15. For example, the first window is a window of a gallery application, the second window is a window of a social application, the icon corresponds to an album, and the element corresponds to a picture.

In this way, the first-level floating window and/or the second-level floating window may support the user in quickly browsing pictures in a plurality of albums to obtain and share a target picture. The user does not need to share a target picture after opening a specific album, thereby shortening a picture delivery path, simplifying user operations, and improving user experience.

In a possible implementation, the first window includes a window of a file management application, and the second window includes a window of an application supporting element reception/transmission; the one or more icons include icons of one or more folders, the first icon includes an icon of a first folder, and the one or more elements in the third window include one or more files in the first folder; and the first element includes any file of the one or more files in the first folder.

A touch method provided in an embodiment of this application may be applied to a file transmission scenario. Refer to the related descriptions in the embodiments shown in FIG. 16 to FIG. 19. For example, the first window is a window of a file management application, the second window is a window of a social application, the icon corresponds to a folder, and the element corresponds to a file.

In this way, the first-level floating window and/or the second-level floating window can support the user in browsing filenames in a plurality of folders quickly, to obtain and share a target file. The user does not need to share a target file after opening a specific folder, thereby shortening a file delivery path, simplifying user operations, and improving user experience.

In a possible implementation, the method further includes: displaying a fourth interface, where the fourth interface includes an eighth window, and a third icon is displayed in the eighth window; receiving a tap operation on the third icon; displaying a fifth interface in response to the tap operation on the third icon, where the fifth interface includes the eighth window, and a first image is displayed in the eighth window; receiving a slide operation on the first image, and displaying a second image in the eighth window of the fifth interface, where the second image is different from the first image;

displaying a fourth interface, where displaying a sixth interface in response to a hover operation by the stylus at the third icon, where the sixth interface includes the eighth window and a ninth window, and the ninth window floats at an upper layer of the eighth window; and the first image and the second image are displayed in the ninth window, and the second image is not included in the eighth window.

This step may correspond to related descriptions in the embodiment shown in FIG. 20. The fourth interface may be, for example, the interface shown in a of FIG. 20, the eighth window may be a full-screen window of a picture and text application, and the third icon may be, for example, a picture and text link 2001.

It can be seen from comparison that after the picture and text link 2001 is tapped, the fifth interface may be, for example, an interface shown in b of FIG. 20. A first picture corresponding to the picture and text link is displayed in the interface. The electronic device may present, based on a leftward slide operation, a second picture, a third picture, and the like corresponding to the picture and text link. The first picture may correspond to the first image, and the second picture may correspond to the second image.

After the hover operation is performed on the picture and text link 2001, the sixth interface may be, for example, an interface shown in c of FIG. 20. The ninth window may be, for example, the first-level floating window 2003. The interface includes the full-screen window of the picture and text application and the first-level floating window 2003. A plurality of pictures such as a first image and a second image under the picture and text link are displayed in the first-level floating window 2003.

It should be noted that, in some scenarios, the icon of the picture and text link 2001 may be a thumbnail of the first picture. In a scenario of a tap operation, the eighth window in the fourth interface does not display the second picture and subsequent pictures in the picture and text link. In the hover operation, the electronic device may display the second image in the ninth window without opening a web page corresponding to the picture and text link.

In this way, the first-level floating window can support the user in quickly browsing pictures in a plurality of picture and text links, and can omit an operation of taping and opening a web page interface of a picture and text link by the user and sliding to view the pictures, thereby simplifying user operations and quickly viewing the pictures.

In a possible implementation, the method further includes: displaying a seventh interface, where the seventh interface includes a tenth window, and one or more videos are displayed in the tenth window; displaying an eighth interface in response to a hover operation by the stylus at a first video of the one or more videos, where the eighth interface includes the tenth window and an eleventh window, the eleventh window floats at an upper layer of the tenth window, one or more video segments of the first video are displayed in the eleventh window, and any video segment corresponds to a time identifier; receiving a trigger operation on a first video segment, where the first video segment is any video segment in the first video; and displaying a ninth interface in response to a trigger operation on the first video segment, where the first video is played on the ninth interface, and a play progress of the first video corresponds to the time identifier of the first video segment.

This step may correspond to related descriptions in the embodiment shown in FIG. 21. The seventh interface may be, for example, the interface shown in a of FIG. 21. The tenth window may be the full-screen window of the video application. The first video may be, for example, the video 2101. The eighth interface may be, for example, the interface shown in b of FIG. 21. The eleventh window may be, for example, the first-level floating window 2102. The first video segment may be, for example, the picture 2103 and a set of frame pictures of subsequent pictures in the video. The ninth interface may be, for example, the interface shown in c of FIG. 21.

It may be understood that, frame pictures obtained by extracting frames from a video may be displayed in the first-level floating window 2102, and the video may be divided into a plurality of video segments by using the plurality of frame pictures. In this embodiment of this application, a picture or a video segment may be presented in the first-level floating window. This is not limited in this embodiment of this application.

It should be noted that, in this embodiment of this application, a relationship between a video segment and a video play progress bar is reflected by using a time identifier. During actual application, a time identifier corresponding to a video segment may not be displayed in the first-level floating window. This is not limited in this embodiment of this application.

In this way, the first-level floating window may be used for segmenting and previewing a video, which can save an operation of sliding a progress bar to view each segment of the video by the user after taping and opening the video, thereby simplifying user operations, and quickly viewing the video.

In a possible implementation, a fourth element is further displayed in the third window, and after the displaying a second interface, the method further includes: receiving a long-press operation on the fourth element; displaying a tenth interface in response to the long-press operation on the fourth element, where the tenth interface includes a first pop-up window, and the first pop-up window includes at least one of the following buttons: a button used for saving the fourth element, a button used for sharing the fourth element, a button used for setting the fourth element as a wallpaper, and/or a cancel button; receiving an operation of dragging the fourth element to a target area; displaying a toolbar in the target area in response to the operation of dragging the fourth element to the target area, where the toolbar includes a fourth icon; and the fourth icon is used for storing an element; receiving an operation of continuing to drag the fourth element to the fourth icon; and displaying, in response to the operation of continuing to drag the fourth element to the fourth icon, information used for indicating that storage of the fourth element is completed.

This step may correspond to related descriptions in the embodiment shown in FIG. 22 to FIG. 23. The third window may be, for example, the first-level floating window 2201 in the interface shown in a of FIG. 22, and the fourth element may be the picture 2202. The tenth interface may be, for example, the interface shown in b of FIG. 22. The first pop-up window may be the pop-up window 2203, and the pop-up window 2203 includes a picture save button, a picture share button, a wallpaper set button, and a cancel button.

In the interface shown in a of FIG. 23, the user may perform a drag operation on the picture 2202. The target area may be a hot zone for triggering displaying a toolbar, and the target area may be an edge area, such as a right side, of the touchscreen. The fourth icon may be, for example, an icon 2302 of all favorites. After dragging the picture 2203 to the icon 2302 of all favorites, the electronic device may store the picture 2203 under the icon 2302 of all favorites. The electronic device displays the interface shown in c of FIG. 23. The information used for identifying that storage of the fourth element is completed may be, for example, an identifier 2303 indicating that favorites adding is completed.

It should be noted that, in some scenarios, the electronic device may also display, based on a hover operation on the icon 2302 of all favorites, pictures and/or files under the icon. Details are not described again in this embodiment of this application.

In this way, the electronic device may deliver the target picture and/or file to the toolbar, and subsequently deliver the target picture and/or file to a target application by using the toolbar, thereby enriching application scenarios of element delivery, providing a plurality of data transmission manners for the user, and improving user experience.

In a possible implementation, the first window includes a full-screen window, the second window includes a floating window, a dimension of the first window is greater than a dimension of the second window, and the dimension of the first window is less than or equal to a dimension of the touchscreen; the dimension of the second window is the same as a dimension of the fifth window; and a dimension of the third window is different from the dimension of the fifth window.

The touch method provided in this embodiment of this application is applicable to delivering an element from one window to another window. The first window may be a full-screen window, and the second window may be a floating window, for example, the embodiments shown in FIG. 12 to FIG. 15, and FIG. 17 to FIG. 18. A dimension of a full-screen window is slightly less than or equal to a dimension of the touchscreen. A dimension of a floating window of a social application is the same as a dimension of a second-level floating window, and a dimension of a first-level floating window is different from the dimension of the second-level floating window.

In this way, the electronic device may deliver, based on the first-level floating window and/or the second-level floating window, an element under an icon in the full-screen window to a floating window of the application supporting element reception/transmission, thereby copying and moving the element.

In a possible implementation, the first window includes a split-screen window, the second window includes a split-screen window, and the dimension of the third window is different from the dimension of the fifth window.

The touch method provided in this embodiment of this application is applicable to delivering an element from one window to another window. The first window may be a split-screen window, and the second window may be a split-screen window, for example, the embodiment shown in FIG. 19.

In this way, the electronic device may deliver, based on the first-level floating window and/or the second-level floating window, an element under an icon in the split-screen window to a split-screen window of the application supporting element reception/transmission, thereby copying and moving the element.

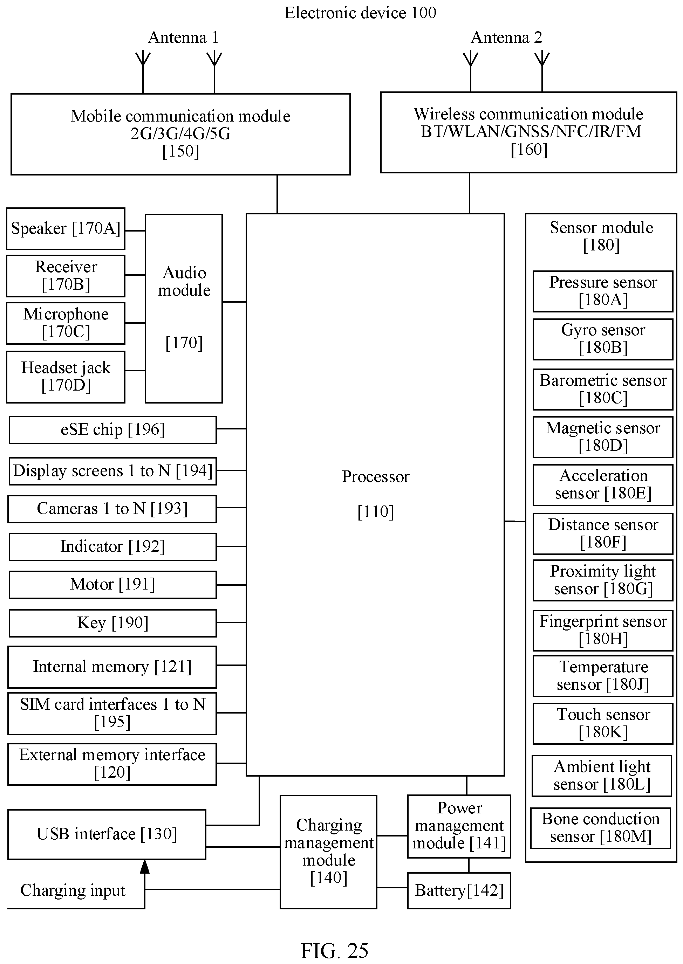

FIG. 25 is a schematic diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, an embedded secure element (embedded secure element, eSE) 196, and the like. The sensor module 180 may include a pressure sensor 180A, a gyro sensor 180B, a barometric sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It may be understood that, schematic structures in embodiments of the disclosure do not constitute specific limitations to the electronic device 100. In some other embodiments of this application, the electronic device 100 may include more or fewer components than those shown in the figure, or some components may be combined, or some components may be split, or a different component deployment may be used.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. In this embodiment of this application, the processor 110 may be configured to perform steps related to information processing. For example, the processor 110 may be configured to perform a process of delivering pictures and/or files between different applications or in a same application.

The electronic device 100 implements a display function by using the GPU, the display screen 194, the application processor, and the like. The display screen 194 is configured to display an image, a video, or the like. In this embodiment of this application, the display screen 194 may also be referred to as a touchscreen. The touchscreen may be configured to display interfaces related to application s such as a gallery application, a file management application, a video application, and a picture and text application.

The internal storage 121 may be configured to store computer-executable program code, and the executable program code includes instructions. The internal storage 121 may include a program storage area and a data storage area. The program storage area may store an operating system, an application needed by at least one function (for example, a sound play function or an image play function), and the like. The data storage area may store data (for example, audio data and an address book) and the like created when the electronic device 100 is used. In addition, the internal memory 121 may include a high-speed random access memory, and may further include a nonvolatile memory, for example, at least one of a magnetic disk storage device, a flash memory device, or a universal flash storage (universal flash storage, UFS). In this embodiment of this application, the processor 110 performs various function applications and data processing of the electronic device 100 by running the instructions stored in the internal memory 121 and/or the instructions stored in the memory arranged in the processor.

The touch sensor 180K is also referred to as a "touch device" The touch sensor 180K may be disposed on the display screen 194. The touch sensor 180K and the display screen 194 form a touchscreen, which is also referred to as a "touch screen". The touch sensor 180K is configured to detect a touch operation on or near the touch sensor 180K. The touch sensor may transfer the detected touch operation to the application processor, to determine a touch event type. Visual output related to the touch operation may be provided through the display screen 194. In some other embodiments, the touch sensor 180K may alternatively be disposed on a surface of the electronic device 100 at a position different from a position of the display screen 194. In this embodiment of this application, the touch sensor 180K may be configured to receive a touch event such as a tap operation or a slide operation, and report the corresponding touch event to the processor.

The touch method in the embodiments of this application is described above. An apparatus for performing the touch method provided in the embodiments of this application is described below. It may be understood by a person skilled in the art that the method and the apparatus may be combined and mutual reference may be made, and that a related apparatus provided in embodiments of this application may perform the steps of the foregoing touch method.

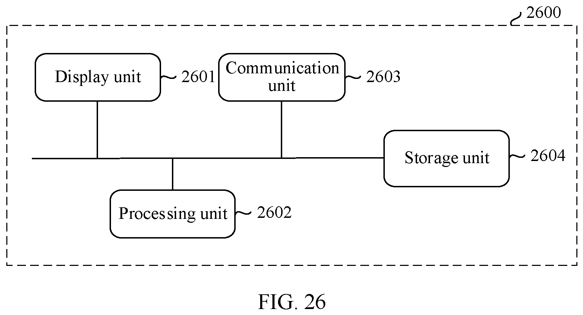

As shown in FIG. 26, the touch apparatus 2600 may be used in a communication device, a circuit, a hardware component, or a chip. The touch apparatus includes: a display unit 2601 and a processing unit 2602. The display unit 2601 is configured to support the touch apparatus 2600 in performing a display step. The processing unit 2602 is configured to support the touch apparatus 2600 to perform a step of information processing.

In a possible implementation, the touch apparatus 2600 may further include a communication unit 2603. Specifically, the communication unit is configured to support the touch apparatus 2600 in performing steps of sending data and receiving data. The communication unit 2603 may be an input/output interface, a pin, a circuit, or the like.

In a possible embodiment, the touch apparatus may further include: a storage unit 2604. The processing unit 2602 and the storage unit 2604 are connected through a line. The storage unit 2604 may include one or more memories, and the memory may be a device in one or more devices or circuits that is configured to store a program or data. The storage unit 2604 may exist independently, and is connected to the processing unit 2602 of the touch apparatus through a communication line. The storage unit 2604 may also be integrated with the processing unit 2602.

The storage unit 2604 may store computer-executable instructions of the methods of the terminal device, so that the processing unit 2602 performs the methods in the foregoing embodiments. The storage unit 2604 may be a register, a cache, a RAM, or the like, and the storage unit 2604 may be integrated with the processing unit 2602. The storage unit 2604 may be a read-only memory (read-only memory, ROM) or another type of static storage device that may store static information and instructions, and the storage unit 2604 may be independent of the processing unit 2602.

The touch method provided in the embodiments of this application may be applied to an electronic device with a communication function. The electronic device includes a terminal device. For a specific device form and the like of the terminal device, refer to the foregoing related descriptions. Details are not described herein again.

An embodiment of this application provides a terminal device. The terminal device includes: includes: a processor and a memory, where the memory stores computer-executable instructions; and the processor is configured to execute the computer-executable instruction stored in the memory, causing the terminal device to perform the foregoing method.

An embodiment of this application provides a chip system. The chip system includes at least one processor and a communication interface. The communication interface and the at least one processor are interconnected through a line. The at least one processor is configured to run a computer program or instructions, to perform the foregoing methods. The implementation is similar to the foregoing related embodiments in terms of implementation principles and technical effects. Details are not described herein again.

An embodiment of the disclosure further provides a computer-readable storage medium. The computer-readable storage medium stores a computer program. The foregoing method is implemented when the computer program is executed by a processor. All or some of methods described in the foregoing embodiments may be implemented by using software, hardware, firmware, or any combination thereof. If the methods are implemented through the software, a function may be stored on the computer-readable medium as one or more instructions or code or transmitted on the computer-readable medium. The computer-readable medium may include a computer storage medium and communication medium, and may also include any medium that can transfer a computer program from one place to another. The storage medium may be any target medium accessible to a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that is intended to carry or store required program code in a form of instruction or data structure, and may be accessed by the computer. Furthermore, any connection is appropriately referred to as the computer-readable medium. For example, if software is transmitted from a website, a server or another remote source by using a coaxial cable, an optical fiber cable, a twisted pair, a digital subscriber line (Digital Subscriber Line, DSL) or wireless technologies (such as infrared ray, radio, and microwave), the coaxial cable, optical fiber cable, twisted pair, DSL or wireless technologies such as infrared ray, radio, and microwave are included in the definition of the medium. A disk and an optical disc as used in this specification include an optical disc, a laser disk, a digital versatile disc (Digital Versatile Disc, DVD), a floppy disk, and a blue-ray disc, where the disk generally reproduces data by magnetic means, while the optical disc optically reproduces data by using a laser. A combination of the foregoing should also be included in the scope of the computer readable medium.

An embodiment of this application provides a computer program product. The computer program product includes a computer program, and when the computer program is run, a computer is enabled to perform the foregoing methods.

The embodiments of this application are described with reference to the flowcharts and/or block diagrams of the method, the device (system), and the computer program product according to embodiments of this application. It should be understood that computer program instructions may be used to implement processes and/or blocks in the flowcharts and/or the block diagrams and a combination of the processes and/or the blocks in the flowcharts and/or the block diagrams. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more flows in the flowcharts and/or in one or more blocks in the block diagrams.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A touch method, applied to an electronic device, and comprising:
displaying a first interface, wherein the first interface comprises a first window and a second window, and one or more icons are displayed in the first window;
displaying a second interface in response to a hover operation by a stylus at a first icon of the one or more icons, wherein the second interface comprises the first window, the second window, and a third window, and one or more elements are displayed in the third window;
replacing, when responding to a first operation on the first icon, the first window on the first interface with a fourth window, wherein elements displayed in the fourth window comprise the one or more elements in the third window; and
continuing to display the third window on the second interface during the hover operation, and displaying, when an operation of dragging a first element from the third window to the second window is received, the first element in the second window in response to the operation of dragging the first element from the third window to the second window, wherein
the first element is any one of the one or more elements in the third window.

2. The method according to claim 1, wherein a first button is further displayed in the third window, and after the continuing to display the third window on the second interface, the method further comprises:
receiving a trigger operation on the first button; and
switching the third window to a fifth window in response to the trigger operation on the first button, wherein a quantity of elements presented in the fifth window is greater than or equal to a quantity of elements presented in the third window; and
the third window on the second interface disappears when the hover operation ends, and the electronic device continues to display the fifth window when the hover operation ends.

3. The method according to claim 2, wherein the method further comprises:
receiving an operation of dragging a second element from the fifth window to the second window, wherein the second element is any one of one or more elements in the fifth window; and
displaying the second element in the second window in response to the operation of dragging the second element from the fifth window to the second window.

4. The method according to claim 2 or 3, wherein after the switching the third window to a fifth window, the method further comprises:
displaying a third interface in response to a hover operation by the stylus at a second icon of the one or more icons, wherein the third interface comprises the first window, the fifth window, and a sixth window, and one or more elements are displayed in the sixth window; and the second icon is different from the first icon;
replacing, when responding to a second operation on the second icon, the first window on the third interface with a seventh window, wherein elements displayed in the seventh window comprise the one or more elements in the sixth window; and
continuing to display the sixth window on the third interface during the hover operation, and displaying, when an operation of dragging a third element from the sixth window to the fifth window is received, the third element in the fifth window in response to the operation of dragging the third element from the sixth window to the fifth window; and
the third element is any one of one or more elements in the fifth window.

5. The method according to any one of claims 1 to 4, wherein the hover operation by the stylus at the first icon of the one or more icons comprises: the stylus is located at the first icon, and a distance between the stylus and a touchscreen of the electronic device is less than a distance threshold; and
in a process of displaying the third window, if the distance between the stylus and the touchscreen is less than the distance threshold and the stylus does not contact the touchscreen, the third window continues to be displayed when the stylus moves in an area in which the third window is located.

6. The method according to any one of claims 1 to 5, wherein after the displaying a second interface, the method further comprises:
receiving a slide operation in the third window; and
displaying, in response to the slide operation, one or more elements moving with a slide position of a touch object in the third window.

7. The method according to claim 6, wherein the touch object comprises a finger of a user or the stylus; and the slide operation comprises:
a slide operation by the finger of the user in the third window during the hover operation;
or a slide operation by the stylus in the third window during the hover operation.

8. The method according to claim 7, further comprising:
continuing to display the third window when the hover operation ends in a process in which the finger of the user slides in the third window; and
after the finger of the user leaves the touchscreen, causing the third window to disappear if a trigger operation by the finger of the user is not received again within first duration.

9. The method according to claim 6 or 7, wherein the touch object comprises the finger of the user, and the receiving a slide operation in the third window further comprises:
continuing to display the third window within first duration when the hover operation ends in the process of displaying the third window; and
receiving a slide operation by the finger of the user in the third window within the first duration; and
after the displaying one or more elements moving with a slide position of a touch object in the third window, the method further comprises:
when the finger of the user leaves the touchscreen, causing the third window to disappear if a trigger operation by the touch object is not received again within the first duration.

10. The method according to any one of claims 1 to 9, wherein that the hover operation ends comprises: a distance between the stylus and the touchscreen is greater than or equal to the distance threshold, the stylus is not in the area in which the third window is located, and/or a trigger operation is received in a non-function area in the first window or the second window.

11. The method according to any one of claims 2 to 10, wherein a second button is further displayed in the fifth window; and after the switching the third window to a fifth window, the method further comprises:
displaying, if an operation of dragging the second button by the touch object is received, the fourth window moving with the slide position of the touch object.

12. The method according to any one of claims 2 to 10, wherein a third button is further displayed in the fifth window; and after the switching the third window to a fifth window, the method further comprises:
continuing to display the first window and skipping displaying the fifth window when a trigger operation on the third button is received.

13. The method according to any one of claims 2 to 10, wherein a fourth button is further displayed in the fifth window; and after the switching the third window to a fifth window, the method further comprises:
replacing the first window with the fifth window when a trigger operation on the fourth button is received.

14. The method according to any one of claims 1 to 13, wherein the first window comprises a window of a gallery application, and the second window comprises a window of an application supporting element reception/transmission; the one or more icons comprise icons of one or more albums, the first icon comprises an icon of a first album, and the one or more elements in the third window comprise one or more images in the first album; and the first element comprises any one of the one or more images in the first album.

15. The method according to any one of claims 1 to 13, wherein the first window comprises a window of a file management application, and the second window comprises a window of an application supporting element reception/transmission; the one or more icons comprise icons of one or more folders, the first icon comprises an icon of a first folder, and the one or more elements in the third window comprise one or more files in the first folder; and the first element comprises any file of the one or more files in the first folder.

16. The method according to any one of claims 1 to 15, further comprising:
displaying a fourth interface, wherein the fourth interface comprises an eighth window, and a third icon is displayed in the eighth window;
receiving a tap operation on the third icon;
displaying a fifth interface in response to the tap operation on the third icon, wherein the fifth interface comprises the eighth window, and a first image is displayed in the eighth window;
receiving a slide operation on the first image, and displaying a second image in the eighth window of the fifth interface, wherein the second image is different from the first image;
displaying the fourth interface; and
displaying a sixth interface in response to a hover operation by the stylus at the third icon, wherein the sixth interface comprises the eighth window and a ninth window, and the ninth window floats at an upper layer of the eighth window; and the first image and the second image are displayed in the ninth window, and the second image is not comprised in the eighth window.

17. The method according to any one of claims 1 to 16, further comprising:
displaying a seventh interface, wherein the seventh interface comprises a tenth window, and one or more videos are displayed in the tenth window;
displaying an eighth interface in response to a hover operation by the stylus at a first video of the one or more videos, wherein the eighth interface comprises the tenth window and an eleventh window, the eleventh window floats at an upper layer of the tenth window, one or more video segments of the first video are displayed in the eleventh window, and any video segment corresponds to a time identifier;
receiving a trigger operation on a first video segment, wherein the first video segment is any video segment in the first video; and
displaying a ninth interface in response to a trigger operation on the first video segment, wherein the first video is played on the ninth interface, and a play progress of the first video corresponds to the time identifier of the first video segment.

18. The method according to any one of claims 1 to 17, wherein a fourth element is further displayed in the third window, and after the displaying a second interface, the method further comprises:
receiving a long-press operation on the fourth element;
displaying a tenth interface in response to the long-press operation on the fourth element, wherein the tenth interface comprises a first pop-up window, and the first pop-up window comprises at least one of the following buttons: a button used for saving the fourth element, a button used for sharing the fourth element, a button used for setting the fourth element as a wallpaper, and/or a cancel button;
receiving an operation of dragging the fourth element to a target area;
displaying a toolbar in the target area in response to the operation of dragging the fourth element to the target area, wherein the toolbar comprises a fourth icon; and the fourth icon is used for storing an element;
receiving an operation of continuing to drag the fourth element to the fourth icon; and
displaying, in response to the operation of continuing to drag the fourth element to the fourth icon, information used for indicating that storage of the fourth element is completed.

19. The method according to any one of claims 1 to 18, wherein the first window comprises a full-screen window, the second window comprises a floating window, a dimension of the first window is greater than a dimension of the second window, and the dimension of the first window is less than or equal to a dimension of the touchscreen; the dimension of the second window is the same as a dimension of the fifth window; and a dimension of the third window is different from the dimension of the fifth window.

20. The method according to any one of claims 1 to 19, wherein the first window comprises a split-screen window, the second window comprises a split-screen window, and the dimension of the third window is different from the dimension of the fifth window.

21. An electronic device, comprising: a processor and a memory, wherein
the memory stores computer-executable instructions; and
the processor executes the computer-executable instructions stored in the memory, to enable the electronic device to perform the method according to any one of claims 1 to 20.

22. A computer-readable storage medium, wherein the computer-readable storage medium stores a computer program, and when the computer program is executed by a processor, the method according to any one of claims 1 to 20 is implemented.

23. A computer program product, comprising a computer program, wherein when the computer program is executed, a computer is enabled to perform the method according to any one of claims 1 to 20.
